# EUROPEAN PATENT APPLICATION

(11) **EP 4 752 638 A1**
(43) Date of publication of application: **03.06.2026**
(21) Application number: 25213839.1
(22) Date of filing: 06.11.2025
(51) Int. Cl.: G03G 15/00, B65H 37/04

(54) **MEDIUM PROCESSING APPARATUS AND IMAGE FORMING SYSTEM**

(30) Priority: 29.11.2024 JP 2024208933
(71) Applicant: Ricoh Company, Ltd., Tokyo 143-8555 (JP)
(72) Inventor: TAKAHASHI, Wataru, Kanagawa 220-0011 (JP); SHIBASAKI, Yuusuke, Kanagawa 220-0011 (JP); HOSHINO, Tomomichi, Kanagawa 220-0011 (JP); ASANO, Sho, Kanagawa 220-0011 (JP); SHINODA, Atsushi, Kanagawa 220-0011 (JP); YOSHIDA, Shota, Kanagawa 220-0011 (JP); KAMEYAMA, Kotomi, Kanagawa 220-0011 (JP); TOHKAISHI, Shuuto, Kanagawa 220-0011 (JP); YASUKAWA, Hirotaka, Kanagawa 220-0011 (JP); YOSHIZAWA, Shingo, Kanagawa 220-0011 (JP); YOSHIDA, Naofumi, Kanagawa 220-0011 (JP); TAKAYAMA, Ryota, Kanagawa 220-0011 (JP); KUNIEDA, Akira, Kanagawa 220-0011 (JP); YAMADA, Jun, Kanagawa 220-0011 (JP); SUZUKI, Yuji, Kanagawa 220-0011 (JP); NOZAKI, Wataru, Kanagawa 220-0011 (JP); HIRATA, Satoshi, Kanagawa 220-0011 (JP); OKAMOTO, Takuya, Kanagawa 220-0011 (JP)
(74) Representative: SSM Sandmair

(57) **Abstract**

A medium processing apparatus (1A, 1B, 1C) includes a stacker (37), a conveyance-direction mover (36, 40L, 40R), a binder (42, 43), and a controller (160). The stacker stacks a medium. The conveyance-direction mover (36, 40L, 40R) moves, in a conveyance direction, a medium bundle that is a plurality of media including the medium stacked on the stacker. The binder (42, 43) moves in a main scanning direction orthogonal to the conveyance direction and bind the medium bundle stacked on the stacker. The controller (160) controls an operation of the conveyance-direction mover and the binder. The controller (160) causes the conveyance-direction mover (36, 40L, 40R) to move the medium bundle stacked on the stacker in the conveyance direction and causes the binder (42, 43) to move in the main scanning direction, face a binding position on the medium bundle, and bind the binding position of the medium bundle.

## Description

### BACKGROUND

### Technical Field

The present disclosure relates to a medium processing apparatus and an image forming system.

### Related Art

Medium processing apparatuses have been proposed that bind sheet-shaped media, on which images have been formed by an image forming apparatus, into a bundle of sheet-shaped media (also referred to as a "medium bundle" in the following description). For example, a medium processing apparatus described in Japanese Unexamined Patent Application Publication No. 2021-42041 includes a moving mechanism that moves a stapler in a main scanning direction to bind a plurality of binding positions in the main scanning direction of a medium bundle loaded on a loading tray.

However, in the configuration of Japanese Unexamined Patent Application Publication No. 2021-42041, the stapler moves only in the main scanning direction, thus hampering the binding position from being moved on a medium bundle stacked on the loading tray. Consequently, the degree of freedom of the binding position is low.

### SUMMARY

The present disclosure has been made to solve such a problem, and an object of the present disclosure is to provide a medium processing apparatus that has an increased degree of freedom of a binding position on a medium bundle.

The present disclosure described herein provides a medium processing apparatus that includes a stacker, a conveyance-direction mover, a binder, and a controller. The stacker stacks a medium. The conveyance-direction mover moves, in a conveyance direction, a medium bundle that is a plurality of media including the medium stacked on the stacker. The binder moves in a main scanning direction orthogonal to the conveyance direction and bind the medium bundle stacked on the stacker. The controller controls an operation of the conveyance-direction mover and the binder. The controller causes the conveyance-direction mover to move the medium bundle stacked on the stacker in the conveyance direction and causes the binder to move in the main scanning direction, face a binding position on the medium bundle, and bind the binding position of the medium bundle.

The present disclosure described herein also provides an image forming system that includes an image forming apparatus and the medium processing apparatus. The image forming apparatus forms an image on a medium. The medium processing apparatus binds the medium bundle including the medium on which the image is formed by the image forming apparatus.

According to an aspect of the present disclosure, the degree of freedom of a binding position on a medium bundle can be increased.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIGS. 1A and 1B are external views of image forming apparatuses;
FIGS. 2A, 2B, and 2C are external views of image forming systems;
FIG. 3 is a diagram illustrating an internal structure of an image forming apparatus;
FIG. 4A is a side view of a binding device according to a first embodiment, illustrating an internal configuration of the binding device;
FIG. 4B is a plan view of the binding device of FIG. 4A, illustrating the position of a conveyance path;
FIG. 5 is a plan view of the binding device of FIG. 4A, illustrating the position of an internal tray of the binding device;
FIGS. 6A-1, 6A-2, 6B-1, and 6B-2 are diagrams illustrating example mechanisms for driving conveyance roller pairs;

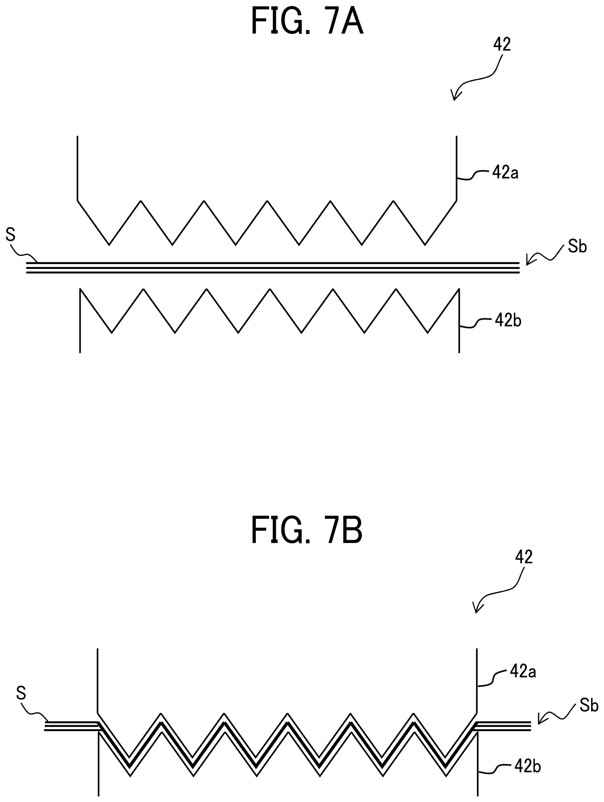

FIGS. 7A and 7B are diagrams illustrating a configuration of a crimper;

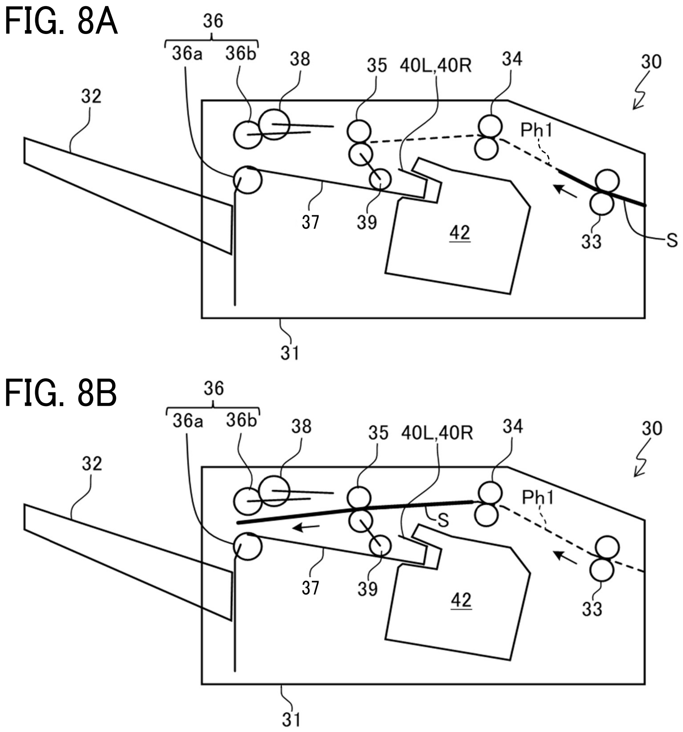

FIGS. 8A and 8B are diagrams illustrating states of a binding device from when a sheet is received to when the sheet reaches a conveyance roller pair;

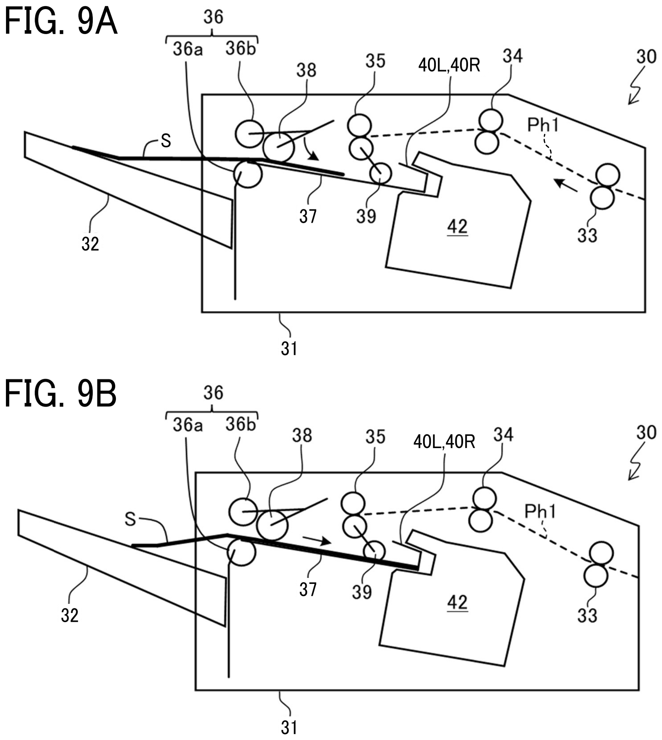

FIGS. 9A and 9B are diagrams illustrating states of a binding device that performs a binding operation.

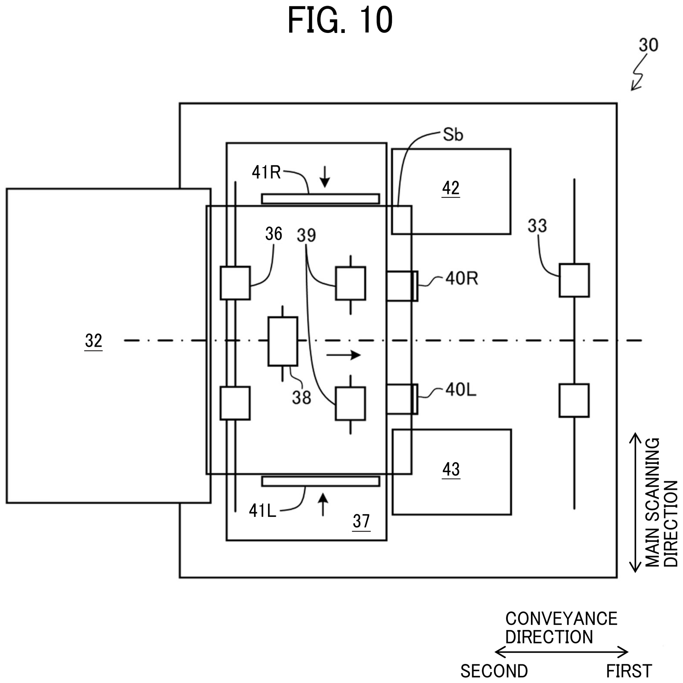

FIG. 10 is a diagram illustrating the binding device of FIG. 9B as viewed from a thickness direction of a sheet;

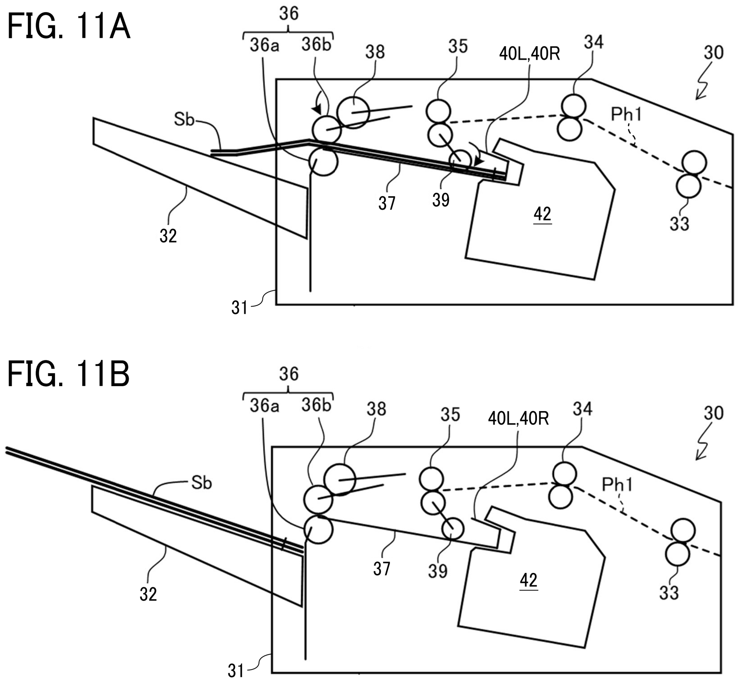

FIGS. 11A and 11B are diagrams illustrating states of a binding device that ejects a sheet bundle having been subjected to a binding operation to an ejection tray;

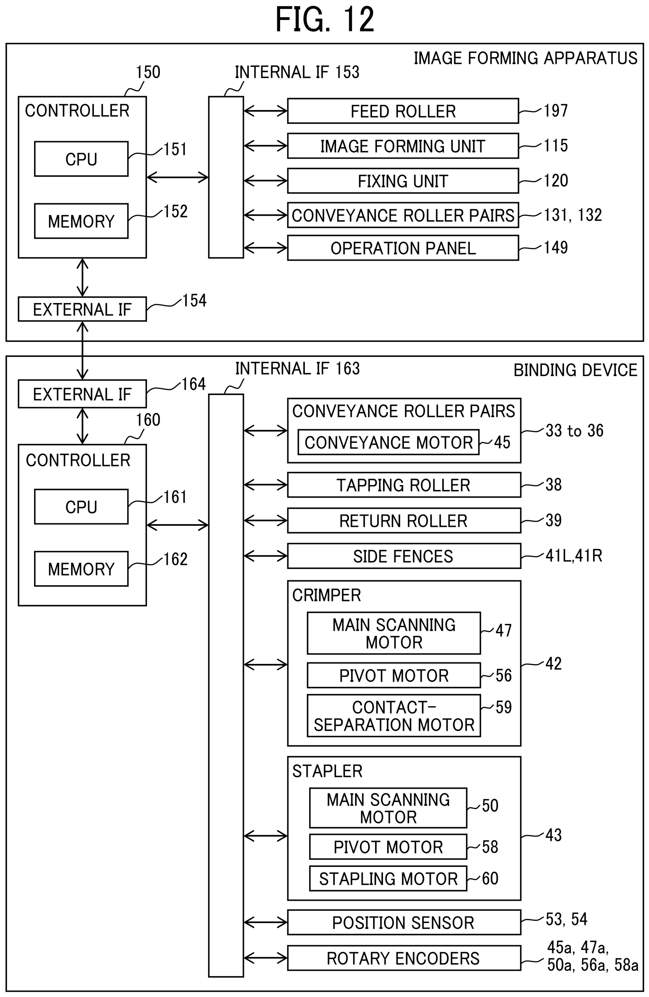

FIG. 12 is a diagram illustrating a hardware configuration of an image forming apparatus;

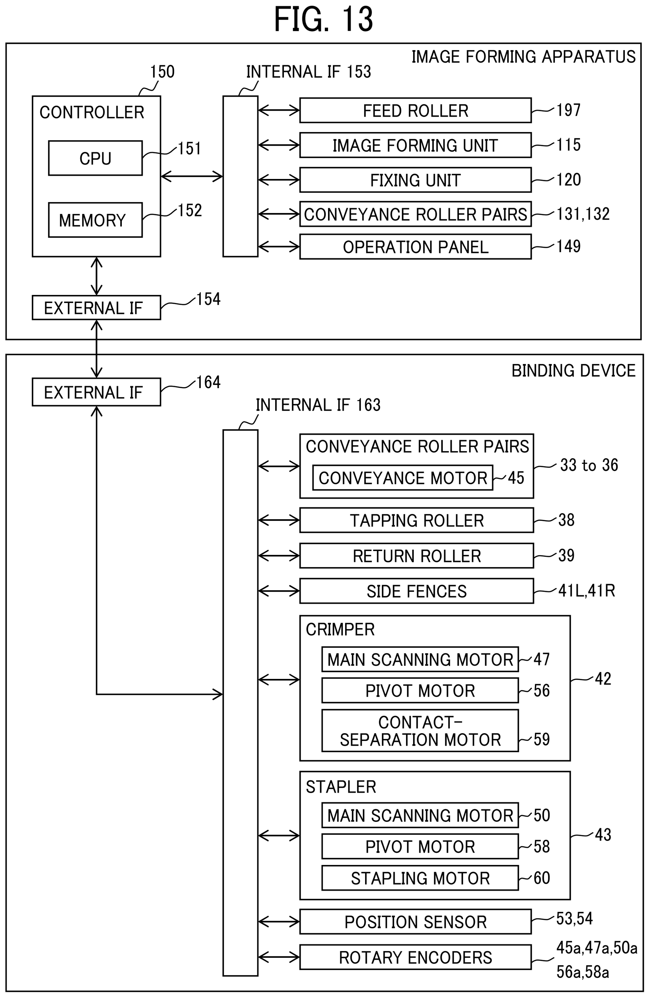

FIG. 13 is a block diagram illustrating a hardware configuration of an image forming apparatus;

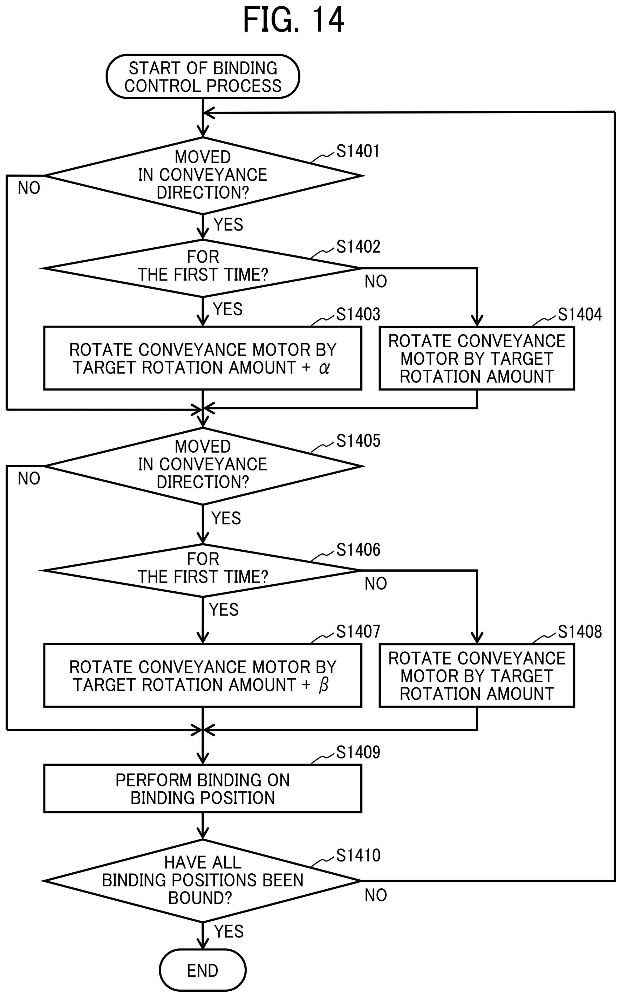

FIG. 14 is a flowchart of a binding control process of the binding device according to the first embodiment;

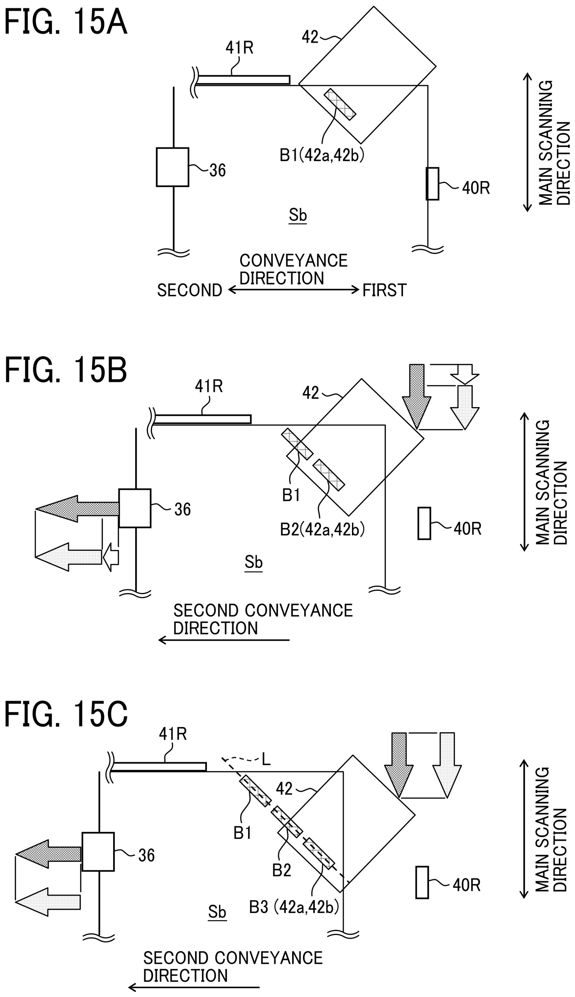

FIGS. 15A, 15B, and 15C are diagrams illustrating an example of relative positions of a sheet bundle and a crimper in a binding control process;

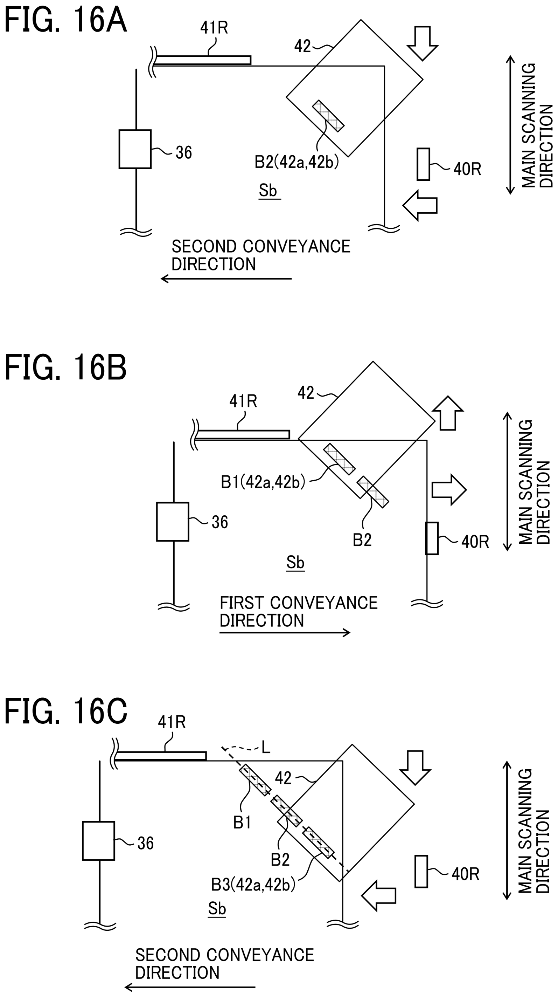

FIGS. 16A, 16B, and 16C are diagrams illustrating another example of relative positions of a sheet bundle and a crimper in a binding control process;

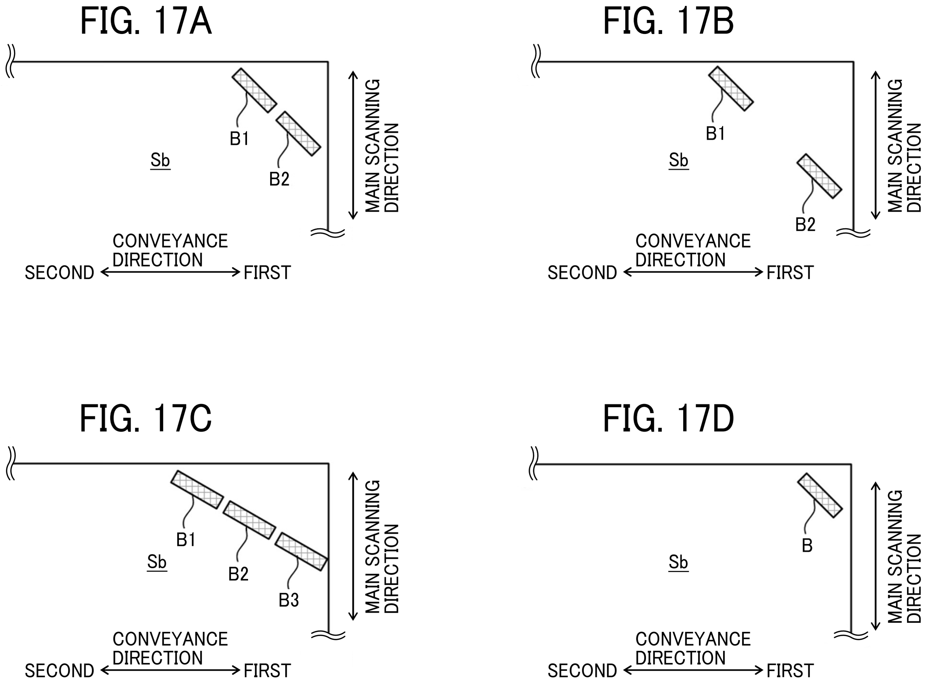

FIGS. 17A, 17B, 17C, and 17D are diagrams illustrating examples of a binding mark;

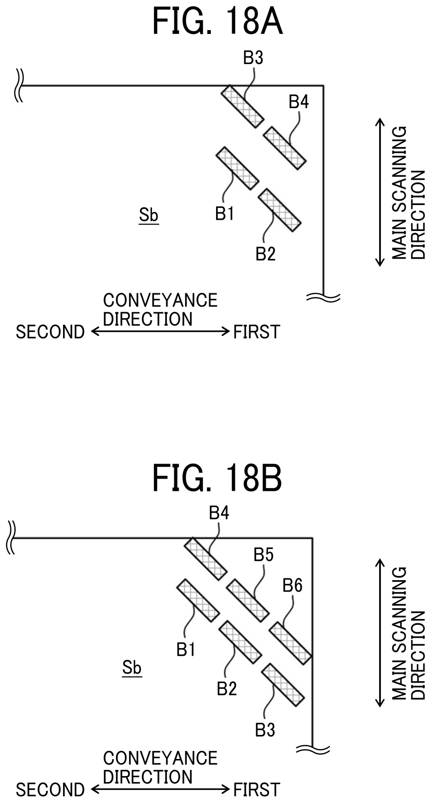

FIGS. 18A and 18B are diagrams illustrating examples of a binding mark;

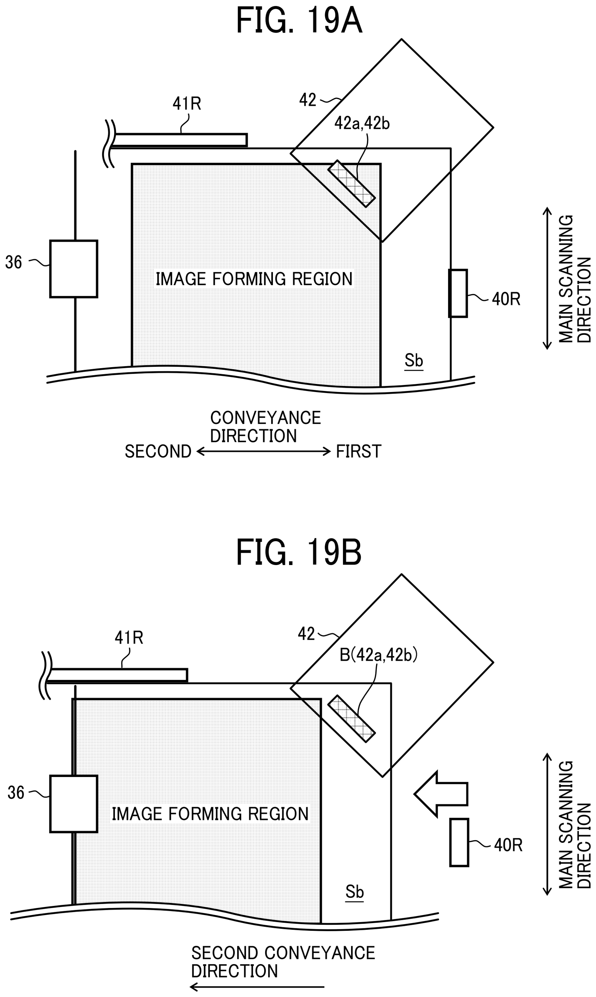

FIGS. 19A and 19B are diagrams illustrating an example of a binding mark formed avoiding an image forming region;

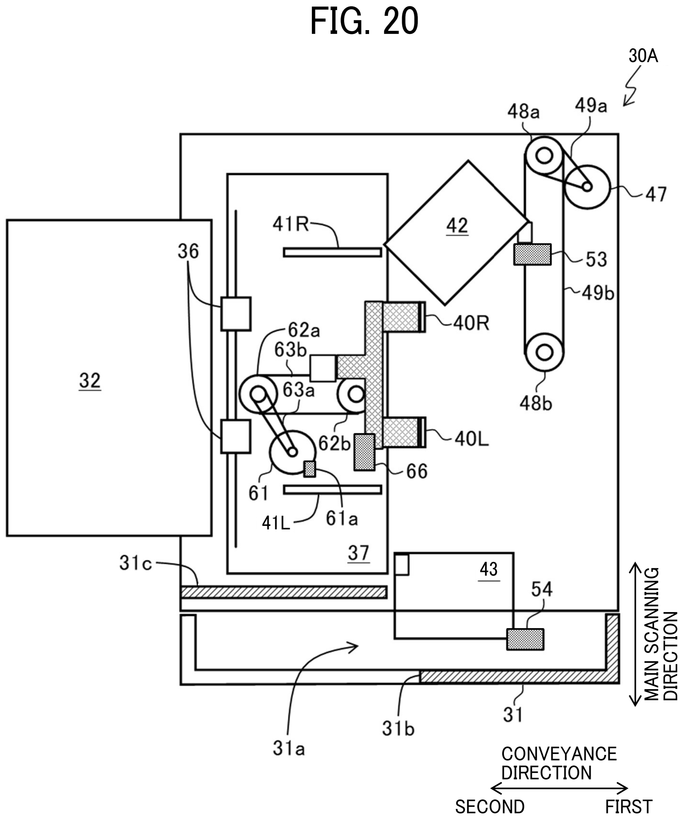

FIG. 20 is an example of a plan view of a binding device according to a second embodiment;

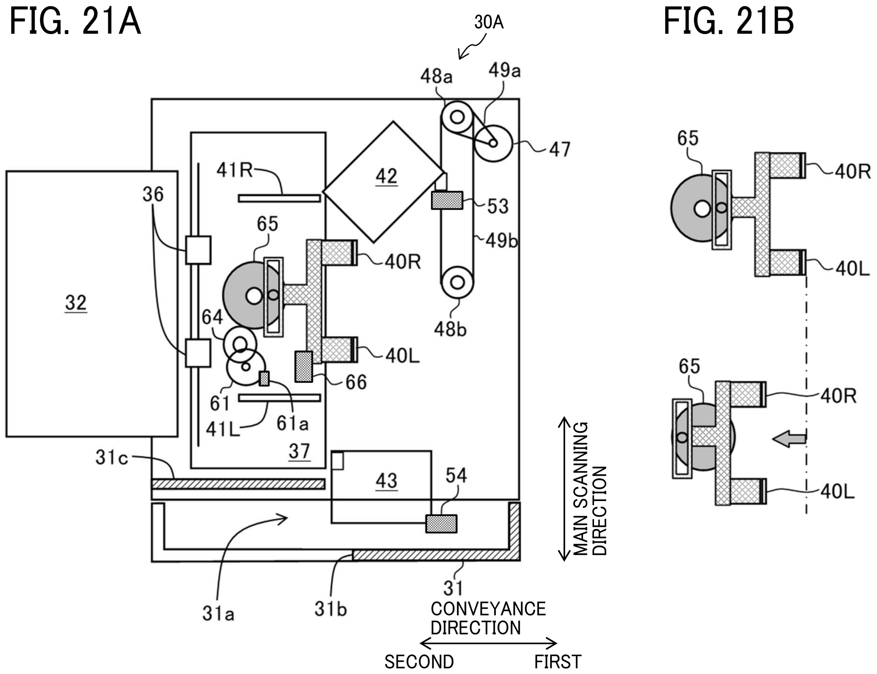

FIGS. 21A is another example of a plan view of the binding device according to the second embodiment;
FIG. 21B is a partial enlarged view of the binding device of FIG. 21A;

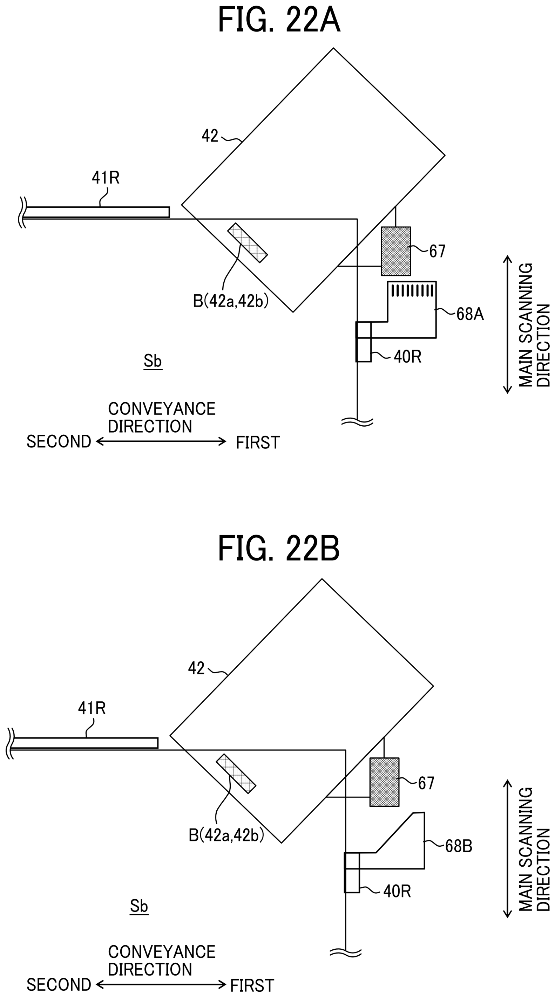

FIGS. 22A and 22B are diagrams illustrating a position sensor of a crimper;

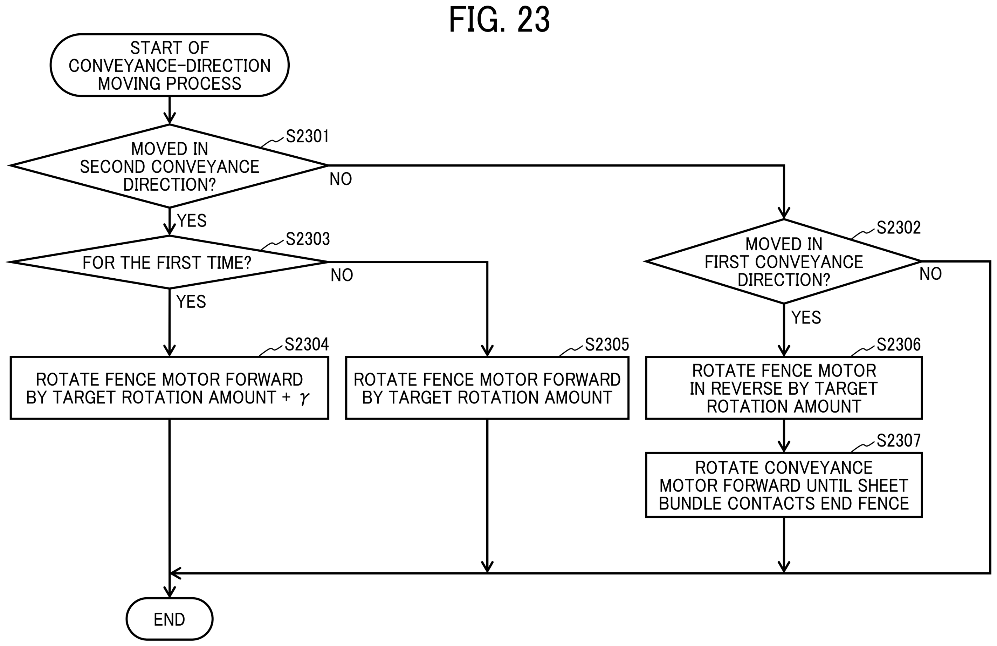

FIG. 23 is a flowchart of a conveyance-direction moving process;

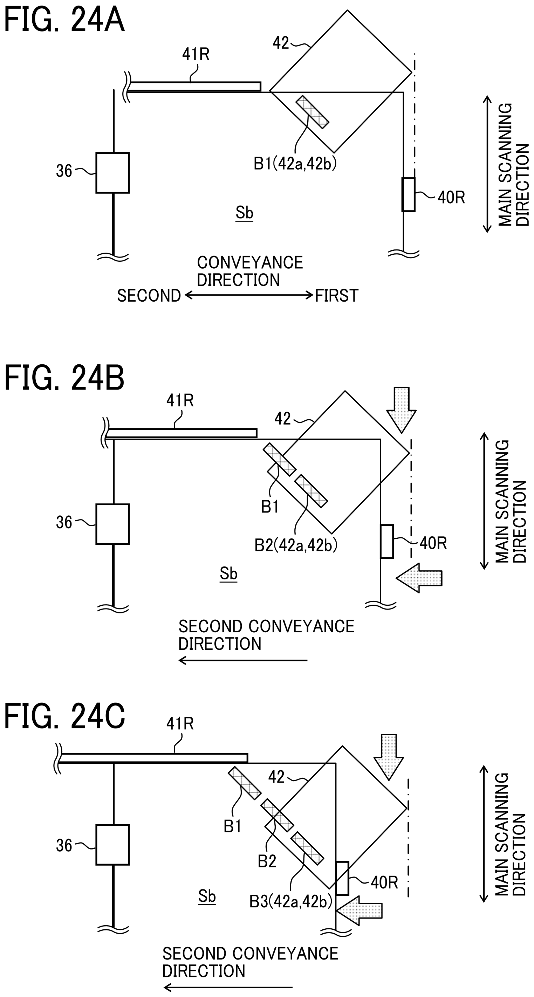

FIGS. 24A, 24B, and 24C are diagrams illustrating an example of relative positions of a sheet bundle and a crimper in a binding control process; and

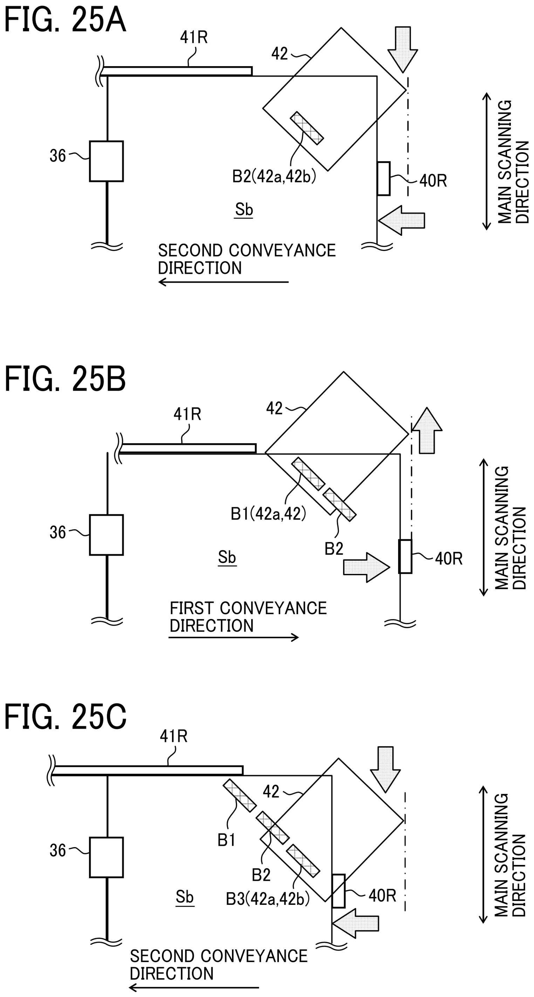

FIGS. 25A, 25B, and 25C are diagrams illustrating another example of relative positions of a sheet bundle and a crimper in a binding control process.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the accompanying drawings. Note that identical parts are given identical reference signs and redundant descriptions are summarized or omitted accordingly.

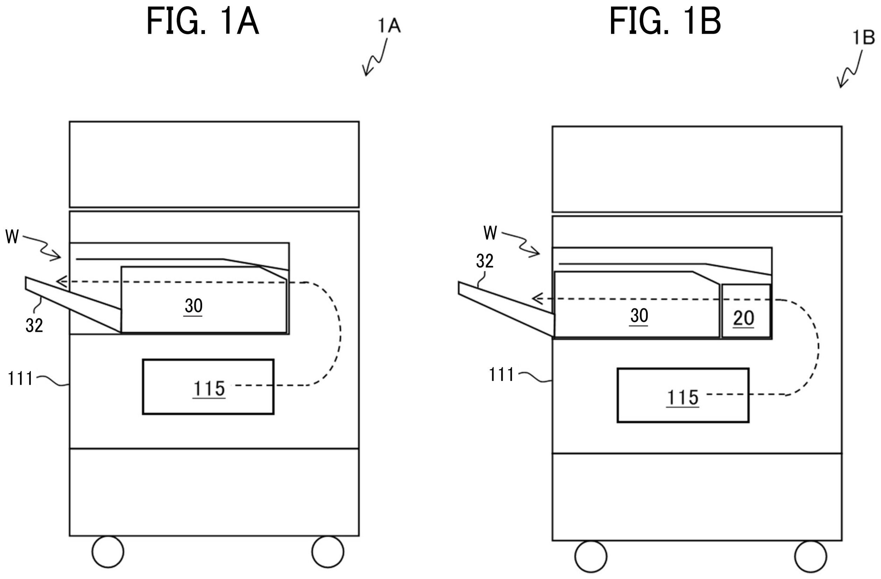

A description is given below of an image forming apparatus 1A and an image forming apparatus 1B with reference to the drawings. FIGS. 1A and 1B are external views of the image forming apparatus 1A and the image forming apparatus 1B, respectively. The image forming apparatus 1A and the image forming apparatus 1B form an image on a sheet S (typically, a paper sheet), which is an example of a sheet-shaped medium. As illustrated in FIGS. 1A and 1B, each of the image forming apparatus 1A and the image forming apparatus 1B includes a housing 111 and an image forming unit 115 (an example of an image former).

The housing 111 has a box shape to form an internal space for accommodating components of each of the image forming apparatus 1A and the image forming apparatus 1B. The housing 111 has an in-body space W that is accessible from the outside of each of the image forming apparatus 1A and the image forming apparatus 1B. The in-body space W is located, for example, slightly above the center of the housing 111 in the vertical direction. The in-body space W is exposed to the outside through a cutting that is made by cutting out an outer wall of the housing 111. In the in-body space W, processing devices (e.g., an optional device 20 and a binding device 30) that perform various processes on a sheet S on which an image has been formed by the image forming unit 115 are installed. The in-body space W is a space to which a sheet S can be ejected from the image forming apparatus 1A or the image forming apparatus 1B, and also a space from which the sheet S ejected from the image forming apparatus 1A or the image forming apparatus 1B can be taken out.

As an example, as illustrated in FIG. 1A, a binding device 30 (an example of a medium processing apparatus) is disposed in the in-body space W of the image forming apparatus 1A. In this configuration, multiple sheets S on which images have been formed by the image forming unit 115 are bound by the binding device 30 and ejected onto an ejection tray 32.

As another example, as illustrated in FIG. 1B, the optional device 20 and the binding device 30 are disposed in the in-body space W of the image forming apparatus 1B. For this configuration, in this example, a plurality of sheets S on which images are formed by the image forming unit 115 are subjected to processing (e.g., liquid application to a binding position, punching of punch holes, or folding) by the optional device 20, subjected to binding by the binding device 30, and ejected onto the ejection tray 32.

Each of the optional device 20 and the binding device 30 is manufactured as a unit and is connectable to an input interface and an output interface for a sheet S. In other words, the optional device 20 and the binding device 30 are replaceable according to the use of the image forming apparatus 1A and the image forming apparatus 1B. More specifically, the output interface of the image forming unit 115 is connectable to the input interfaces of the optional device 20 and the binding device 30. The input interface of the binding device 30 is also connectable to the output interface of the optional device 20. The adjacent units are detachably connected to each other by, e.g., a mechanical lock or a magnet. Each device installed in the in-body space W is connected to a controller 150 (see FIG. 12) by a harness for transmitting and receiving various signals.

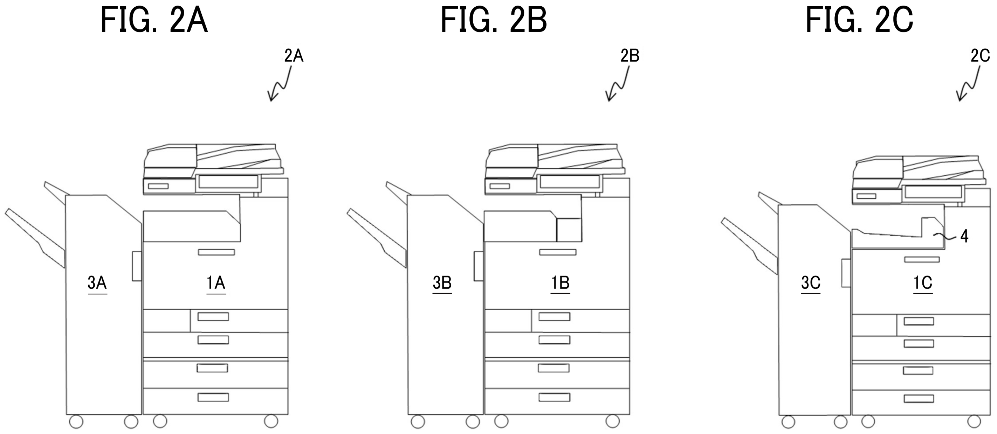

FIG. 2 is an external view of an image forming system 2A, an image forming system 2B, and an image forming system 2C. As illustrated in FIGS. 2A, 2B, and 2C, the image forming systems 2A, 2B, and 2C includes image forming apparatuses 1A, 1B, and 1C, and post-processing apparatuses 3A, 3B, and 3C, respectively. The post-processing apparatuses 3A and 3B may be, for example, devices that perform a sorting process of sorting a sheet bundle Sb (an example of a medium bundle) ejected from the binding device 30. In the in-body space W of the image forming apparatus 1C, a relay device 4 is installed that relays a sheet S, on which an image has been formed and which is ejected to the in-body space W, to the post-processing apparatus 3C. The post-processing apparatus 3C may be, for example, the binding device 30. In other words, as illustrated in FIG. 2C, the binding device 30 may be external to the image forming apparatus 1C.

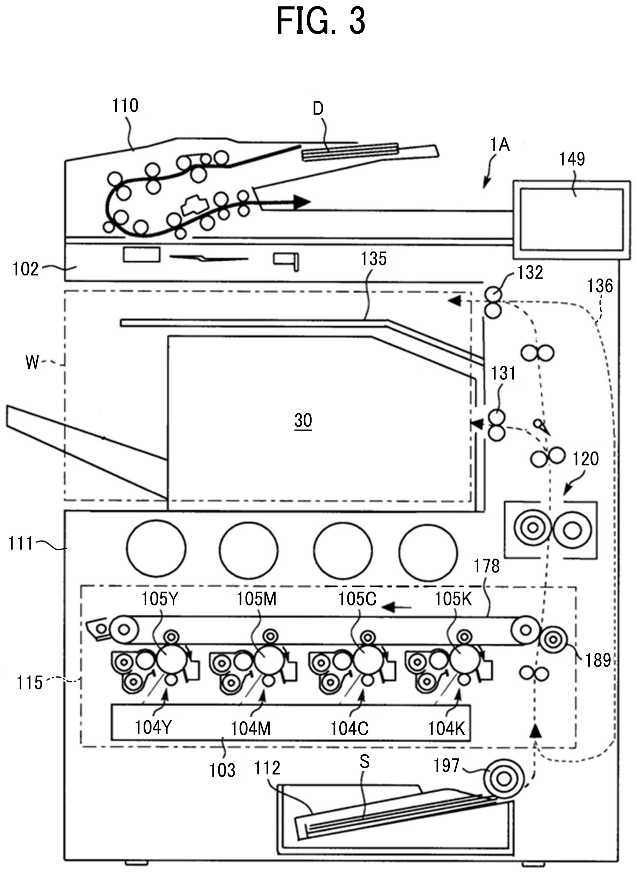

FIG. 3 is a diagram illustrating an internal configuration of the image forming apparatus 1A. The image forming apparatuses 1B and 1C have the same or similar internal configuration as the internal configuration of the image forming apparatus 1A. The image forming apparatus 1A includes a document conveying device 110, a document reading device 102, a feed tray 112, a feed roller 197, an image forming unit 115, a fixing unit 120, conveyance roller pairs 131 and 132 (an example of a conveying unit), and an ejection tray 135. In this specification, an example of the image forming unit 115 of an electrophotographic system that forms an image using toner is described. However, the image forming unit may also be of an inkjet system that forms an image using ink.

The document conveying device 110 conveys a document D on which an image has already been formed toward the document reading device 102. The document reading device 102 optically reads an image formed on the document D conveyed by the document conveying device 110, and generates image data. As a reading element of the document reading device 102, for example, a charge-coupled device (CCD) sensor or a complementary metal oxide semiconductor (CMOS) can be used.

The feed tray 112 stores a plurality of sheets S in a stacked manner. The feed roller 197 feeds the sheets S, which are stored in the feed tray 112, toward the image forming unit 115 one by one. The image forming unit 115 forms an image represented by image data generated by the document reading device 102 (or image data received from an external apparatus via a communication network) on the sheet S fed by the feed roller 197. The image forming unit 115 includes a writing device 103, image forming units 104Y, 104M, 104C, and 104K, an intermediate transfer belt 178, and a secondary transfer roller 189.

The writing device 103 converts an image represented by the image data into respective laser beams of a plurality of colors (e.g., yellow, magenta, cyan, and black) and irradiates the photoconductor drums 105Y, 105M, 105C, and 105K of the image forming units 104Y, 104M, 104C, and 104K with the laser beams. As a result, images of the corresponding colors are formed on the surfaces of the photoconductor drums 105Y, 105M, 105C, and 105K. The corresponding color images formed on the photoconductor drums 105Y, 105M, 105C, and 105K are superimposed one on another and transferred onto the intermediate transfer belt 178. Thus, a color image is formed. The secondary transfer roller 189 transfers the color image, which has been formed on the intermediate transfer belt 178, onto the sheet S fed by the feed roller 197 and conveys the sheet S to the fixing unit 120.

The fixing unit 120 fixes the image, which has been transferred onto the sheet S by the secondary transfer roller 189, on the sheet S and conveys the sheet S to the conveyance roller pairs 131 and 132. The conveyance roller pair 131 conveys the sheet S, which has passed through the fixing unit 120, toward the binding device 30 installed in the in-body space W. The conveyance roller pair 132 conveys the sheet S, which has passed the fixing unit 120, toward the ejection tray 135 installed in the in-body space W. Alternatively, the conveyance roller pair 132 reverses the front and back sides of the sheet S, which has passed through the fixing unit 120, through a reverse conveyance path 136 and supplies the sheet S to the image forming unit 115 again. The destination of the sheet S that has passed through the fixing unit 120 is switched by, for example, a user operation through the operation panel 149 (or an instruction from an external device).

A descriptions is given below of a binding device 30 according to a first embodiment.

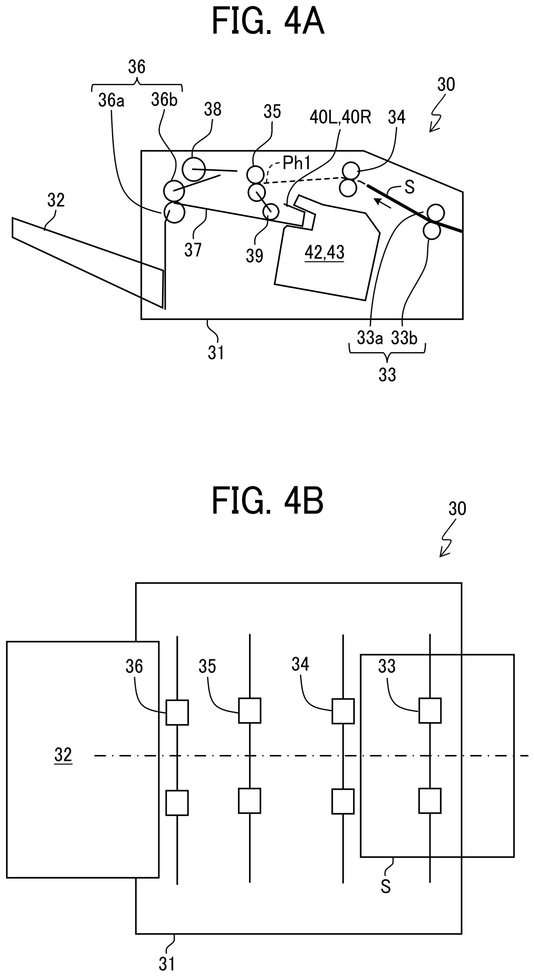

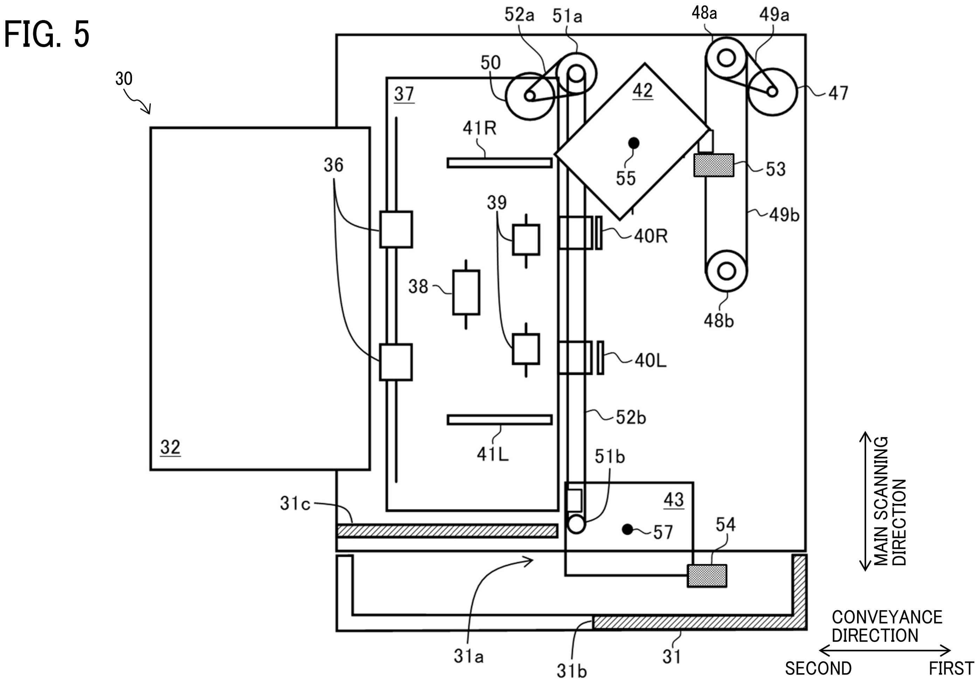

FIG. 4A is a side view of the binding device 30 according to the first embodiment, illustrating the internal configuration of the binding device 30. FIG. 4B is a plan view of the binding device 30, illustrating the position of a conveyance path PH1. FIG. 5 is a plan view of the binding device 30 according to the first embodiment, illustrating the position of an internal tray 37 of the binding device 30. The binding device 30 performs a binding operation (post-processing) that binds multiple sheets S (sheet bundle Sb) on which images are formed by the image forming unit 115. As illustrated in FIGS. 4A and 4B and FIG. 5, the binding device 30 includes a binding case 31, an ejection tray 32, multiple conveyance roller pairs 33, 34, 35, and 36 (an example of a conveyor), an internal tray 37 (an example of a stacker), a tapping roller 38, a return roller 39, end fences 40L and 40R (an example of a conveyance-direction aligner), side fences 41L and 41R (main-scanning-direction aligner), a crimper 42, and a stapler 43.

The binding case 31 has a box shape to form an internal space for accommodating components of the binding device 30. The conveyance path Ph1 as a space through which the sheet S passes is formed in the internal space of the binding case 31. The ejection tray 32 is supported on an outer side face of the binding case 31. The ejection tray 32 supports the sheet S or the sheet bundle Sb conveyed by the conveyance roller pairs 33 to 36.

The conveyance roller pairs 33 to 36 are arranged on the conveyance path Ph1 at given intervals. The conveyance roller pairs 33 to 36 convey the sheet S along the conveyance path Ph1. The conveyance roller pair 33 includes a drive roller 33a and a driven roller 33b disposed facing each other across the conveyance path Ph1. The drive roller 33a and the driven roller 33b are rotatably supported by the binding case 31. When the driving force from a conveyance motor 45 is transmitted to the drive roller 33a, the drive roller 33a rotates forward in the direction of conveying the sheet S (e.g., clockwise direction of FIG. 4A). The driven roller 33b is disposed facing the drive roller 33a across the conveyance path Ph1 and is driven by the rotation of the drive roller 33a. As the conveyance motor 45 is driven with the drive roller 33a and the driven roller 33b nipping the sheet S, the sheet S is conveyed along the conveyance path Ph1.

A basic configuration of the conveyance roller pairs 34 to 36 is common to the configuration of the conveyance roller pair 33. The conveyance roller pair 36 includes a drive roller 36a and a driven roller 36b that can be brought into contact with and separated from the drive roller 36a. The conveyance roller pair 35 may be slidable in the width direction in order to implement a sorting operation of shifting a sheet S in the width direction and ejecting the sheet S to the ejection tray 32.

FIGS. 6A-1, 6A-2, 6B-1, and 6B-2 are diagrams illustrating examples of a mechanism that drives the conveyance roller pair 36. As illustrated in FIGS. 6A-1 and 6A-2, for example, the conveyance roller pair 36 according to the first embodiment is driven by a drive shaft 44a, a driven shaft 44b, a conveyance motor 45 (an example of a drive source), a plurality of gears 46a and 46b (an example of a driving-force transmission mechanism).

The drive shaft 44a and the driven shaft 44b, each of which extends in the main scanning direction, are positioned on opposite sides with respect to the sheet S. The drive shaft 44a and the driven shaft 44b are rotatably supported by the binding case 31. The drive shaft 44a is inserted through the drive roller 36a, and the drive shaft 44a and the drive roller 36a rotate together. The driven shaft 44b is inserted through the driven roller 36b, and the driven shaft 44b and the driven roller 36b rotate together. The conveyance motor 45 is rotatable in a forward direction and a reverse direction under the control of the controller 160. The gear 46a is attached to an output shaft of the conveyance motor 45. The gear 46b is attached to the drive shaft 44a. The gear 46a and the gear 46b are meshed with each other.

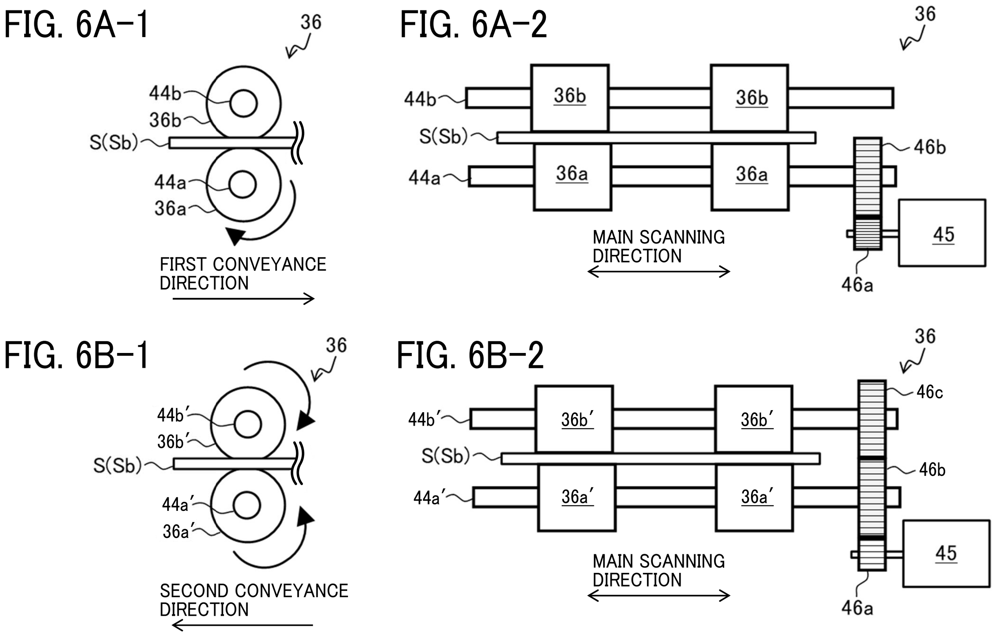

The driving force of the conveyance motor 45 is transmitted to the drive shaft 44a via the gear 46a and the gear 46b. When the conveyance motor 45 rotates in the forward direction, the drive roller 36a rotates in the clockwise direction in FIG. 6A-1, and the driven roller 36b is driven in the counterclockwise direction in FIG. 6A-1 in accordance with the rotation of the drive roller 36a. Accordingly, a sheet S or a sheet bundle Sb nipped between the drive roller 36a and the driven roller 36b is conveyed in a first conveyance direction (i.e., a direction approaching the end fences 40L and the 40R). On the other hand, when the conveyance motor 45 rotates in the reverse direction, the drive roller 36a rotates in the counterclockwise direction in FIG. 6A-1, and the driven roller 36b is driven in the clockwise direction in FIG. 6A-1 in accordance with the rotation of the drive roller 36a. Accordingly, the sheet S or the sheet bundle Sb nipped by the drive roller 36a and the driven roller 36b is conveyed in a second conveyance direction (i.e., a direction away from the end fences 40L and 40R).

In the present specification, among the conveyance directions of the sheet S or the sheet bundle Sb supported on the internal tray 37, the direction approaching the end fences 40L and 40R is referred to as the "first conveyance direction", and the direction away from the end fences 40L and 40R is referred to as the "second conveyance direction." In other words, the first conveyance direction and the second conveyance direction are in opposite directions to each other. The first conveyance direction and the second conveyance direction may be collectively referred to simply as a "conveyance direction." A direction that is orthogonal to the conveyance direction and the thickness direction of the sheet S supported on the internal tray 37 is referred to as the "main scanning direction."

As a modification, for example, as illustrated in FIGS. 6B-1 and 6B-2, the conveyance roller pair 36 may be driven by pairs of drive rollers 36a' and 36b', a pair of drive shafts 44a' and 44b', the conveyance motor 45 (drive source), and gears 46a, 46b, and 46c (driving-force transmission mechanism).

Th drive shafts 44a' and 44b', each of which extends in the main scanning direction, are positioned on opposite sides of the sheet S. The drive shafts 44a' and 44b' are rotatably supported by the binding case 31. The drive shaft 44a' is inserted through the drive roller 36a', and the drive shaft 44b' is inserted through the drive roller 36b'. The conveyance motor 45 is rotatable in a forward direction and a reverse direction under the control of the controller 160. The gear 46a is attached to an output shaft of the conveyance motor 45. The gear 46b is attached to the drive shaft 44a'. The gear 46c is attached to the drive shaft 44b'. The gears 46a, 46b, and 46c are meshed with each other.

The driving force of the conveyance motor 45 is transmitted to the drive shafts 44a' and 44b' via the gears 46a, 46b, and 46c. When the conveyance motor 45 rotates in the forward direction, the drive roller 36a' rotates in the clockwise direction in FIG. 6B-1, and the drive roller 36b' rotates in the counterclockwise direction in FIG. 6B-1. As a result, the sheet S or the sheet bundle Sb nipped by the drive rollers 36a' and 36b' is conveyed in the first conveyance direction. On the other hand, when the conveyance motor 45 rotates in the reverse direction, the drive roller 36a' rotates in the counterclockwise direction in FIG. 6B-1, and the drive roller 36b' rotates in the clockwise direction in FIG. 6B-1. As a result, the sheet S or the sheet bundle Sb nipped by the drive rollers 36a' and 36b' is conveyed in the second conveyance direction.

According to the example of FIGS. 6A-1 and 6A-2, the mechanism for transmitting the driving force of the conveyance motor 45 to the conveyance roller pair 36 is simplified. On the other hand, according to the example of FIG. 6B-1 and 6B-2, the driving force of the conveyance motor 45 is transmitted to both of the drive rollers 36a' and 36b'. Thus, the idling (slipping) of the drive rollers 36a' and 36b' with respect to the sheet S or the sheet bundle Sb can be reduced. The method of transmitting the driving force of the conveyance motor 45 to the conveyance roller pair 36 is not limited to the gears, and may be an endless annular belt, a cam, or other components.

The internal tray 37 illustrated in FIG. 5 temporarily supports and accumulates multiple sheets S that are conveyed by the conveyance roller pair 36. The tapping roller 38 is supported at an end of a rotation arm above the internal tray 37. As the rotation arm is rotated, the tapping roller 38 supplies the sheet S nipped by the conveyance roller pair 36 to the internal tray 37. The return roller 39 contacts the upper side of the sheet S supported on the internal tray 37 and rotates to guide the sheet S toward the conveyance roller pair 36.

The end fences 40L and 40R contact a downstream end of the sheets S supported on the internal tray 37 in the first conveyance direction and align the positions of the sheets S in the conveyance direction. The side fences 41L and 41R contact both ends in the width direction of the sheets S supported on the internal tray 37 to align the position of the sheets S in the main scanning direction.

The crimper 42 and the stapler 43 (an example of binders) are disposed at positions at the downstream end of the sheet bundle Sb, which is supported on the internal tray 37, in the first conveyance direction. The crimper 42 and the stapler 43 move independently in the main scanning direction along the sheet bundle Sb supported on the internal tray 37. The crimper 42 and the stapler 43 pivot independently around a rotation shaft 55 and a rotation shaft 57, respectively, each of which extends in the thickness direction of the sheet S supported on the internal tray 37. The crimper 42 is, for example, a crimper that presses and deforms a sheet bundle Sb to bind the sheet bundle Sb. The stapler 43 is, for example, a stapler that cause a staple(s) to penetrate a sheet bundle Sb to bind the sheet bundle Sb. However, the binding device 30 may include only one of the crimper 42 and the stapler 43 or may include both of the crimper 42 and the stapler 43.

The crimper 42 moves in the main scanning direction by a main scanning motor 47, a drive pulley 48a, a driven pulley 48b, and endless annular belts 49a and 49b. The main scanning motor 47 generates a driving force for moving the crimper 42 in the main scanning direction. The drive pulley 48a and the driven pulley 48b are rotatably supported by the binding case 31 at positions away from each other in the main scanning direction. The endless annular belt 49a is looped around an output shaft of the main scanning motor 47 and the drive pulley 48a. The endless annular belt 49b is looped around the drive pulley 48a and the driven pulley 48b. The crimper 42 is attached to the endless annular belt 49b.

The driving force of the main scanning motor 47 is transmitted to the drive pulley 48a through the endless annular belt 49a. The endless annular belt 49b circulates around the drive pulley 48a and the driven pulley 48b in accordance with rotation of the drive pulley 48a. As a result, the crimper 42 attached to the endless annular belt 49b moves in the main scanning direction. The drive pulley 48a, the driven pulley 48b, and the endless annular belts 49a and 49b are an example of a driving-force transmission mechanism that transmits the driving force of the main scanning motor 47 to the crimper 42. However, the specific configuration of the driving-force transmission mechanism is not limited to the above-described example.

The stapler 43 moves in the main scanning direction by a main scanning motor 50, a drive pulley 51a, a driven pulley 51b, and endless annular belts 52a and 52b. The main scanning motor 50 generates a driving force for moving the stapler 43 in the main scanning direction. The drive pulley 51a and the driven pulley 51b are rotatably supported by the binding case 31 at positions away from each other in the main scanning direction. The endless annular belt 52a is looped around the output shaft of the main scanning motor 50 and the drive pulley 51a. The endless annular belt 52b is looped around the drive pulley 51a and the driven pulley 51b. The stapler 43 is attached to the endless annular belt 52b.

The driving force of the main scanning motor 50 is transmitted to the drive pulley 51a through the endless annular belt 52a. The endless annular belt 52b circulates around the drive pulley 51a and the driven pulley 51b in accordance with rotation of the drive pulley 51a. Accordingly, the stapler 43 attached to the endless annular belt 52b moves in the main scanning direction. The drive pulley 51a, the driven pulley 51b, and the endless annular belts 52a and 52b are an example of a driving-force transmission mechanism that transmits the driving force of the main scanning motor 50 to the stapler 43. However, the specific configuration of the driving-force transmission mechanism is not limited to the above-described example.

The binding device 30 includes a position sensor 53 and a position sensor 54. The position sensor 53 and the position sensor 54 detect the positions of the crimper 42 and the stapler 43, respectively, in the main scanning direction. The position sensor 53 outputs a position signal to the controller 160, for example, when the crimper 42 is disposed at a predetermined position (home positions) in the main scanning direction, and stop outputting the position signal when the crimper 42 is disposed at a position different from the home position. The position sensor 54 outputs a position signal to the controller 160, for example, when the stapler 43 is disposed at a predetermined position (home position) in the main scanning direction, and stops outputting the position signal when the stapler 43 is disposed at a position different from the home position. The specific configuration of the position sensors 53 and 54 is not limited to any particular configuration. However, for example, mechanical sensors, optical sensors, or magnetic sensors can be employed.

The crimper 42 is supported on the binding case 31 so that the crimper 42 can pivot around the rotation shaft 55 extending in the thickness direction of the sheet S supported on the internal tray 37. The crimper 42 is driven by the power transmitted from the rotating motor 56 (see FIG. 12) to pivot between a parallel binding posture illustrated in FIG. 10 and an oblique binding posture illustrated in FIG. 5. Similarly, the stapler 43 is driven by the driving force transmitted from the pivot motor 58 (see FIG. 12) to pivot around the rotation shaft 57 extending in the thickness direction of the sheet S supported on the internal tray 37.

A slit 31a for manual binding is disposed at a position facing the stapler 43 of the binding case 31. The corner of the sheet bundle Sb inserted into the binding case 31 through the slit 31a can be manually bound by the stapler 43. The binding case 31 further includes a guide wall 31b and a guide wall 31c to surround the slit 31a. The guide wall 31b positions the sheet bundle Sb to be manually bound (i.e., whose corner is inserted into the slit 31a) in the conveyance direction. The guide wall 31c positions the sheet bundle Sb to be manually bound (i.e., whose corner is inserted into the slit 31a) in the main scanning direction. In the following description, in the main scanning direction, the side close to the slit 31a is referred to as a "front side", and the side far from the slit 31a is referred to as a "back side."

FIGS. 7A and 7B are diagrams illustrating a configuration of the crimper 42. As illustrated in FIGS. 7A and 7B, the crimper 42 nips a sheet bundle Sb in the thickness direction with a serrate upper crimping teeth 42a and a serrate lower crimping teeth 42b to press and deform the sheet bundle Sb to bind the sheet bundle Sb. In other words, the crimper 42 is a staple-less binder that can bind the sheet bundle Sb without staples. The components of the crimper 42 such as the upper crimping teeth 42a and the lower crimping teeth 42b are disposed on a crimping frame. In the following description, such a way of pressing and deforming the binding position of the sheet bundle Sb with the crimper 42 to bind the sheet bundle Sb may be referred to simply as "crimping."

The crimper 42 includes the upper crimping teeth 42a and the lower crimping teeth 42b. The upper crimping teeth 42a and the lower crimping teeth 42b are disposed to face each other in the thickness direction of the sheet bundle Sb to nip the sheet bundle Sb placed on the internal tray 37. The upper crimping teeth 42a and the lower crimping teeth 42b have respective serrate faces facing each other. The serrate face of each of the upper crimping teeth 42a and the lower crimping teeth 42b includes concave portions and convex portions alternately formed. The concave portions and the convex portions of the upper crimping teeth 42a are offset from those of the lower crimping teeth 42b such that the upper crimping teeth 42a are engaged with the lower crimping teeth 42b. The upper crimping teeth 42a and the lower crimping teeth 42b are brought into contact with and separated from each other by a driving force of a contact-and-separation motor 59 illustrated in FIG. 12.

In the process of supplying the sheets S of the sheet bundle Sb to the internal tray 37, the upper crimping teeth 42a and the lower crimping teeth 42b are separated from each other as illustrated in FIG. 7A. When all of the sheets S of the sheet bundle Sb are placed on the internal tray 37, the upper crimping teeth 42a and the lower crimping teeth 42b engage with each other as illustrated in FIG. 7B by the driving force of the contact-separation motor 59 to press and deform the sheet bundle Sb in the thickness direction. Accordingly, the sheet bundle Sb accumulated on the internal tray 37 is crimped and bound.

As illustrated in FIGS. 15A, 15B, and 15C and FIGS. 16A, 16B, and 16C, rectangular binding marks B1, B2, and B3 (collectively referred to as "binding marks B") are formed on the surface of a sheet bundle Sb that is crimped by the crimper 42. When the crimper 42 is in the parallel binding posture, the longitudinal direction of the binding mark B extends in a direction along the main scanning direction (typically, parallel to the main scanning direction). On the other hand, when the crimper 42 is in the oblique binding posture, the longitudinal direction of the binding mark B is inclined with respect to the main scanning direction. In the examples of FIGS. 15A to 16C, the longitudinal direction of the binding mark B is at 45° with respect to the main scanning direction. However, the crimper 42 may be rotated at any angle.

The stapler 43 causes a staple(s) to pass through the sheet bundle Sb supported on the internal tray 37, using the driving force of the binding motor 60, to bind the sheet bundle Sb. In the following description, the act of passing a staple(s) through the binding position of a sheet bundle Sb using the stapler 43 may be referred to simply as "stapling." The staple that has bound the sheet bundle Sb has a rectangular shape when viewed from the thickness direction of the sheet bundle Sb. In the following description, the portion of the staple on the sheet bundle Sb is also referred to as a "binding mark."

A description is given of a basic operation of the binding device 30.

With reference to FIGS. 8A to 11B, the binding operation is described. FIGS. 8A and 8B are diagrams illustrating states of the binding device 30 until the sheet S reaches the conveyance roller pair 36. FIGS. 9A and 9B are diagrams illustrating states of the binding device 30 that performs the binding operation. FIG. 10 is a diagram illustrating the binding device 30 of FIG. 9B as viewed from the thickness direction of the sheet S. FIGS. 11A and 11B are diagrams illustrating the binding device 30 when a sheet bundle Sb subjected to the binding operation is ejected to the ejection tray 32.

The binding device 30 rotates the conveyance roller pairs 33 to 35 forward to convey the sheet S supplied from the image forming unit 115 along the conveyance path Ph1 as illustrated in FIGS. 8A and 8B. At this time, in the conveyance roller pair 36, the drive roller 36a and the driven roller 36b are separated from each other.

As illustrated in FIGS. 9A and 9B, the binding device 30 causes the tapping roller 38 to contact the sheet S after the sheet S passes through the conveyance roller pair 35 and rotates the tapping roller 38 to store the sheet S in the internal tray 37. As illustrated in FIG. 10, downstream ends of the sheets S, which are accumulated on the internal tray 37, in the first conveyance direction contact the end fences 40L and 40R, and thus the positions of the sheets S in the conveyance direction are aligned. The binding device 30 moves the side fences 41L and 41R in the main scanning direction to align the positions of the sheets S stored in the internal tray 37 in the main scanning direction. The binding device 30 repeats the operations illustrated in FIGS. 8A to 10, and thus a sheet bundle Sb is formed on the internal tray 37.

As illustrated in FIG. 11A, the binding device 30 causes the crimper 42 to face the binding position of the sheet bundle Sb in response to a predetermined number of sheets S being stacked on the internal tray 37. The binding device 30 drives the crimper 42 to bind the sheet bundle Sb supported on the internal tray 37. As illustrated in FIG. 11B, the binding device 30 rotates the conveyance motor 45 in reverse to cause the conveyance roller pair 36 to eject the sheet bundle Sb to the ejection tray 32.

A descriptions is given below of a hardware configuration of the image forming apparatus 1A.

FIG. 12 is a diagram illustrating a hardware configuration of the image forming apparatus 1A. As illustrated in FIG. 12, the image forming apparatus 1A includes a controller 150 (an example of a controller) that controls the operation of a main unit of the image forming apparatus 1A, and a controller 160 (an example of a controller) that controls the operation of the binding device 30. The controller 150 and the controller 160 work together to control the operation of the image forming apparatus 1A.

The controller 150 includes, for example, a central processing unit (CPU) 151, and a memory 152. The controller 160 includes, for example, a central processing unit (CPU) 161 and a memory 162. Each of the memory 152 and the memory 162 includes, for example, a read-only memory (ROM), a random-access memory (RAM), a hard disk drive (HDD), or a combination of the ROM, the RAM, and the HDD. The controller 150 causes the CPU 151 to read and execute the program code stored in the memory 152 to achieve the processing described later. The controller 160 also causes the CPU 161 to read and execute the program code stored in the memory 162 to achieve the processing described later. However, the specific configurations of the controller 150 and the controller 160 are not limited to the above-described configurations, and may be achieved using hardware such as application-specific integrated circuits (ASICs) or field-programmable gate arrays (FPGAs).

The controller 150 controls the operations of the components (e.g., the feed roller 197, the image forming unit 115, the fixing unit 120, the conveyance roller pairs 131 and 132, and the operation panel 149) of the main unit of the image forming apparatus 1A through the internal IF 153. The controller 160 controls the operations of the components (e.g., the conveyance roller pairs 33 to 36, the tapping roller 38, the return roller 39, the side fences 41L and 41R, the crimper 42, the stapler 43, the position sensors 53 and 54, and the rotary encoders 45a, 47a, 50a, 56a, and 58a) of the binding device 30 through the internal IF 163. Although some motors and sensors are illustrated in FIG. 12, each component is driven by a motor (an example of a drive source), and the state of operation (e.g., position or posture) is detected by a sensor.

The operation panel 149 includes an operation device that receives instructions from a user and a display (an example of a notifier) that notifies the user of information. The operation device includes, for example, hard keys and a touch screen overlaid on the display. The operation panel 149 acquires information from an operator through the operation device and provides the operator with information through the display. The specific example of the notifier is not limited to the display and may be, for example, a light-emitting diode (LED) lamp or a speaker.

The rotary encoders 45a, 47a, 50a, 56a, and 58a detect the drive amounts (i.e., rotation amounts) of the conveyance motor 45, the main scanning motors 47 and 50, and the rotating motors 56 and 58, respectively. More specifically, the rotary encoders 45a, 47a, 50a, 56a, and 58a output pulse signals to the controller 160 in accordance with the rotations of the corresponding motors 45, 47, 50, 56, and 58. The controller 160 counts the pulse signals output from the rotary encoders 45a, 47a, 50a, 56a, and 58a to grasp the drive amounts of the corresponding motors 45, 47, 50, 56, and 58.

Furthermore, the controllers 150 and 160 are connected to each other via external IFs 154 and 164 to communicate with each other. The controllers 150 and 160 cooperate to control the operation of each component based on the information transmitted and received through the external IFs 154 and 164.

FIG. 13 is another block diagram illustrating a hardware configuration of the image forming apparatus 1A. FIG. 13 is different from FIG. 12 in that the controller 160 of the binding device 30 is omitted, and is the same as FIG. 12 in other points. The controller 150 illustrated in FIG. 13 controls the operations of the components of the main unit of the image forming apparatus 1A through the internal IF153, and controls the operations of the components of the binding device 30 through the external IFs 154 and 164 and the internal IF 163. In other words, the binding device 30 illustrated in FIG. 13 operates under the control of the controller 150 installed in the main unit of the image forming apparatus 1A.

A descriptions is given below of the binding control process.

FIG. 14 is a flowchart of a binding control process according to the first embodiment. FIGS. 15A, 15B, and 15C are diagrams illustrating an example of the relative positions of a sheet bundle Sb and the crimper 42 in the binding control process. FIG. 16A, 16B, and 16C are diagrams illustrating another example of the relative positions of the sheet bundle Sb and the crimper 42 in the binding control process. The binding control process is a process that controls the conveyance roller pair 36 and the crimper 42 to bind the binding position of the sheet bundle Sb supported on the internal tray 37. The binding position refers to a location on the sheet bundle Sb at which the sheet bundle Sb is bound by the crimper 42. In other words, the binding position is a location on the sheet bundle Sb at which a binding mark B is formed. In the following description, the process of binding a sheet bundle Sb by the crimper 42 is described, but the process of binding a sheet bundle Sb by the stapler 43 is performed in a similar manner.

The controller 150 repeatedly executes a process of forming an image on a sheet S stored in the feed tray 112 and supplying the sheet S to the binding device 30, for example, in accordance with an instruction of a user through the operation panel 149 (or an instruction from an external device). Additionally, the controller 150 outputs binding information to the controller 160 through the external IF 154 prior to (or in parallel with) the above-described process. The binding information output by the controller 150 may be default settings stored in the memory 152, settings input by the user through the operation panel 149, or settings indicated by an external device.

Examples of the binding information include the number of sheets S in the sheet bundle Sb, the location of the binding position on the sheet bundle Sb (e.g., the coordinates on the sheet bundle Sb), and the number of binding positions on the sheet bundle Sb. The binding information may include the order of binding multiple binding positions. The binding information may include at least one of the medium information and the image formation information. Examples of the medium information include information on the sheets S of the sheet bundle Sb, such as the thickness of the sheet S, the type of the sheet S (e.g., glossy paper or plain paper), the size of the sheet S (e.g., A4 or B4), and the ratio (e.g., duty ratio) of the area of an image to the area of the sheet S. The image formation information is, for example, information for specifying a region on the sheet S on which an image is formed (in the following description, referred to as an "image forming region") (e.g., a set of coordinates for specifying a region where an image is formed in two dimensional coordinates with one corner of the sheet S as an origin).

The controller 160 acquires binding information from the controller 150 through the external IF 164. The controller 160 stacks the sheets S (i.e., the sheets S on which images are formed), which are sequentially supplied from the main unit of the image forming apparatus 1A, on the internal tray 37 by the method described with reference to FIGS. 8A to 10. When the controller 160 determines that the number of sheets S accumulated in the internal tray 37 has reached the number of sheets S indicated by the binding information, the controller 160 executes the binding control process illustrated in FIG. 14. On the other hand, in the case of the hardware configuration illustrated in FIG. 13, the controller 150 executes the above-described processes. For example, assume that, at the start of the binding control process, the sheet bundle Sb stacked on the internal tray 37 abuts on the end fences 40L and 40R, and the crimper 42 is located at the home position.

In step S1401, the controller 160 determines whether the sheet bundle Sb stacked on the internal tray 37 needs to be moved in the conveyance direction in order to cause the crimper 42 (more specifically, the upper crimping teeth 42a and the lower crimping teeth 42b) to face the binding position. In other words, the controller 160 may compare the binding position indicated by the binding information with the (fixed) position of the crimper 42 in the conveyance direction to determine whether the movement is necessary.

When the controller 160 determines that the sheet bundle Sb does not need to be moved in the conveyance direction (No in step S1401), the controller 160 proceeds to the process of step S1405 and the subsequent steps without executing the process of steps S1402 to S1404. On the other hand, when the controller 160 determines that the sheet bundle Sb needs to be moved in the conveyance direction (Yes in step S1401), in step S1402, the controller 160 determines whether the sheet bundle Sb is moved for the first time in the conveyance direction in the binding control process for the sheet bundle Sb (i.e., the step of binding a plurality of binding positions of the sheet bundle Sb).

When the controller 160 determines that the sheet bundle Sb is moved for the first time (Yes in step S1402), in step S1403, the controller 160 causes the drive roller 36a and the driven roller 36b to nip the sheet bundle Sb and rotates the conveyance motor 45 by a target rotation amount + α, as illustrated in FIG. 15B. On the other hand, when the controller 160 determines that the sheet bundle Sb is moved for the second time or later (No in step S1402), in step S1404, the controller 160 causes the drive roller 36a and the driven roller 36b to nip the sheet bundle Sb between the drive roller 36a and the driven roller 36b and rotates the conveyance motor 45 by the target rotation amount, as illustrated in FIG. 15C.

First, the controller 160 compares the binding position indicated by the binding information with the position of the crimper 42 in the conveyance direction, and specifies a target movement amount (e.g., 20 mm) and a movement direction of the sheet bundle Sb in the conveyance direction. On other words, the target movement amount may vary each time step S1403 or step S1404 is executed. The target rotation amount of the conveyance motor 45 for moving the sheet bundle Sb by the target movement amount is determined in advance as the number of pulses (e.g., 1000 pulses) of the rotary encoder 45a. However, in the first movement, the actual movement amount of the sheet bundle Sb does not reach the target movement amount due to play of the driving-force transmission mechanism (e.g., the backlash of the gear 46a and the gear 46b), even if the conveyance motor 45 is rotated by the target rotation amount.

For this reason, compared to the second or subsequent rotation amount, the controller 160 increases the first rotation amount (drive amount) of the conveyance motor 45 with respect to the target movement amount. The increase amount α (e.g., 15 pulses) may be a constant or a variable. In FIGS. 15B and 15C, the target movement amount is indicated by a black arrow, the actual movement amount corresponding to the target rotation amount is indicated by a gray arrow, and the actual movement amount corresponding to the increase amount α is indicated by a white arrow.

In step S1405, the controller 160 determines whether the crimper 42 needs to be moved in the main scanning direction in order to cause the crimper 42 (more specifically, the upper crimping teeth 42a and the lower crimping teeth 42b) to face the binding position. In other words, the controller 160 may compare the binding position indicated by the binding information with the position of the crimper 42 in the main scanning direction detected by the position sensor 53 and the rotary encoder 47a to determine whether the movement is necessary.

When the controller 160 determines that the crimper 42 does not need to be moved in the main scanning direction (No in step S1405), the controller 160 proceeds to the process of step S1409 and the subsequent steps without executing the process of steps S1406 to S1408. On the other hand, when the controller 160 determines that the crimper 42 needs to be moved in the main scanning direction (Yes in step S1405), in step S1406, the controller 160 determines whether the crimper 42 is moved for the first time in the main scanning direction in the binding control process for the sheet bundle Sb (i.e., the step of binding the plurality of binding positions of the sheet bundle Sb).

When the controller 160 determines that the crimper 42 is moved for the first time (Yes in step S1406), in step S1407, the controller 160 rotates the main scanning motor 47 by the target rotation amount + β. On the other hand, when the controller 160 determines that the crimper 42 is moved for the second time or later (No in step S1406), in step S1408, the controller 160 rotates the main scanning motor 47 by the target rotation amount. The process of steps S1406 to S1408 is performed, for example, to absorb an error in the movement amount caused by the slack of the endless annular belts 49a and 49b, and the specific content of the process is common with steps S1402 to S1404. The values α and β may be the same values or different values.

Accordingly, the crimper 42 faces the binding position of the sheet bundle Sb in the thickness direction of the sheet bundle Sb. The execution order of the process in steps S1401 to S1404 and the process in steps S1405 to S1408 is not limited to the order illustrated in FIG. 14, and may be executed in reverse order or in parallel.

In step S1409, the controller 160 drives the contact-separation motor 59 to crimp the binding position of the sheet bundle Sb with the crimper 42. In step S1410, the controller 160 determines whether all binding positions indicated by the binding information have been bound. When the controller 160 determines that not all binding positions have been bound (NO in step S1410), the controller 160 executes the process of step S1401 and the subsequent steps again. In other words, the controller 160 repeatedly executes the process of steps S1401 to S1409 for the number of binding positions. When the controller 160 determines that all binding positions have been bound (Yes in step S1410), the controller 160 ends the binding control process and ejects the bound sheet bundle Sb to the ejection tray 32 via the conveyance roller pair 36.

FIGS. 15A to 16C illustrate an example in which three binding positions at the upper left corner of the sheet bundle Sb are sequentially bound by the crimper 42 in the oblique binding posture. The three binding positions in FIG. 15A to FIG. 16C are arranged so that straight lines L extending in the longitudinal direction of the binding marks B1, B2, and B3 coincide.

As an example, as illustrated in FIGS. 15A to 15C, the controller 160 may cause the crimper 42 to bind three binding positions arranged in a straight line in order from an end (i.e., in order of the binding marks B1, B2, and B3). In other words, as illustrated in FIG. 15A, the controller 160 causes the crimper 42 to bind a sheet bundle Sb at the binding position corresponding to the binding mark B1 in a state the sheet bundle Sb abuts on the end fences 40L and 40R. Subsequently, as illustrated in FIG. 15B, the controller 160 causes the conveyance roller pair 36 to move the sheet bundle Sb in the second conveyance direction and causes the crimper 42 to move to the front side in the main scanning direction, thus causing the crimper 42 to bind the sheet bundle Sb at the binding position corresponding to the binding mark B2. Then, as illustrated in FIG. 15C, the controller 160 causes the conveyance roller pair 36 to move the sheet bundle Sb in the second conveyance direction and causes the crimper 42 to move to the front side in the main scanning direction, thus causing the crimper 42 to bind the sheet bundle Sb at the binding position corresponding to the binding mark B3.

As another example, as illustrated in FIGS. 16A to 16C, the controller 160 may cause the crimper 42 to bind three binding positions arranged in a straight line such that a central binding position of the three binding positions is first bound (i.e., in the order of binding marks B2, B1, and B3). In other words, as illustrated in FIG. 16A, the controller 160 moves the sheet bundle Sb abutting on the end fences 40L and 40R in the second conveyance direction by the conveyance roller pair 36, and causes the crimper 42 to bind the sheet bundle Sb at the binding position corresponding to the binding mark B2. Subsequently, as illustrated in FIG. 16B, the controller 160 causes the sheet bundle Sb to move in the first conveyance direction by the conveyance roller pair 36 and causes the crimper 42 to move to the back side in the main scanning direction, thus causing the crimper 42 to bind the sheet bundle Sb at the binding position corresponding to the binding mark B1. Then, as illustrated in FIG. 16C, the controller 160 causes the conveyance roller pair 36 to move the sheet bundle Sb in the second conveyance direction and causes the crimper 42 to move toward the near side in the main scanning direction, thus causing the crimper 42 to bind the sheet bundle Sb at the binding position corresponding to the binding mark B3.

A descriptions is given below of an operational effect of the first embodiment.

According to the first embodiment, a sheet bundle Sb is moved in the conveyance direction by the conveyance roller pair 36, and the crimper 42 is moved in the main scanning direction, thus allowing the crimper 42 to face any desired binding position on the sheet bundle Sb. As a result, the degree of freedom of the binding position on the sheet bundle Sb is increased.

According to the first embodiment, the binding marks B1, B2, and B3 bound in the oblique binding posture can be arranged in a straight line without adding a dedicated mechanism for causing the crimper 42 to face a plurality of binding positions. Aligning the binding marks B1, B2, and B3 in a straight line allows the binding strength to be enhanced.

In the case of binding a plurality of binding positions arranged in a straight line, when sheets are bound in order from the end as illustrated in FIGS. 15A, 15B, and 15C, the sheets S of the sheet bundle Sb may be misaligned. Then, as illustrated in FIGS. 16A, 16B, and 16C, binding first from the center of multiple binding positions allows the misalignment of the sheets S can be reduced.

According to the first embodiment, the existing conveyance roller pair 36 is caused to function as a conveyance-direction mover. Thus, it is not necessary to newly add the conveyance-direction mover. However, the conveyance-direction mover is not limited to the conveyance roller pair 36, and may, for example, be the tapping roller 38, the return roller 39, or a combination of the tapping roller 38 and the return roller 39. In other words, the conveyance-direction mover may be any device as long as the device can move a sheet bundle Sb stacked on the internal tray 37 in the first conveyance direction and the second conveyance direction.

According to the first embodiment, in the process of binding multiple binding positions of a sheet bundle Sb, the first rotation amount of the conveyance motor 45 and the main scanning motor 47 are increased relative to the target rotation amount. Thus, an error in the actual movement amount caused by play in the driving-force transmission mechanism. As a result, the crimper 42 can be precisely aligned with the binding position.

However, the adjustment of the rotation amount of the conveyance motor 45 and the main scanning motor 47 is not limited to between the first time and the second or subsequent time. The controller 160 may increase and/or decrease the rotation amounts of the conveyance motor 45 and the main scanning motor 47 with respect to the target movement amount, for example, based on the medium information obtained from the controller 150.

As an example, the controller 160 may increase the rotation amounts of the conveyance motor 45 and the main scanning motor 47 with respect to the target movement amount, as the thickness of the sheet S increases. As another example, the controller 160 may increase the rotation amounts of the conveyance motor 45 and the main scanning motor 47 with respect to the target movement amount, as the amount of toner adhered to the sheet S increases (i.e., as the duty ratio is greater). As still another example, the controller 160 may reduce the rotation amounts of the conveyance motor 45 and the main scanning motor 47 with respect to the target movement amount, as the amount of ink adhered to the sheet S is greater (i.e., the duty ratio is greater).

A description is given below of other examples of binding positions.

The binding positions on the sheet bundle Sb are not limited to the examples in FIG. 15A to FIG. 16C. FIGS. 17A to 17D are diagrams illustrating another example of the binding mark B. FIGS. 18A and 18B are diagrams illustrating still another example of the binding mark B. FIGS. 19A and 19B are diagrams illustrating an example of the binding mark B outside an image forming region. The controller 160 can change the position and number of the binding positions on a sheet bundle Sb, for example, as follows.

As illustrated in FIGS. 17A and 17B, two binding marks B1 and B2 may be arranged in a straight line. The two binding marks B1 and B2 may be placed close together as illustrated in FIG. 17A or spaced apart as illustrated in FIG. 17B. As illustrated in FIG. 17C, the angle formed by the longitudinal direction of the binding marks B1 to B3 with respect to the main scanning direction may be other than 45°. As illustrated in FIG. 17D, the binding mark B may be in one location. As illustrated in FIGS. 18A and 18B, a plurality of rows of binding marks, each row including multiple binding marks, may be arranged in the short direction. This arrangement enables sheets to be bound in accordance with the state of images formed on sheets S. The number of binding positions can be adjusted based on the balance between binding strength and productivity.

As illustrated in FIG. 19B, the controller 160 may cause the crimper 42 to bind a binding position that is outside the image forming region of each of the sheets S included in the sheet bundle Sb. In other words, the controller 160 may acquire the image formation information from the controller 150 through the external IF 164, specify a binding position deviated from the image forming regions of all the sheets S based on the acquired image formation information, and cause the crimper 42 to bind the specified binding position. For example, as illustrated in FIG. 19A, a sheet bundle Sb abuts on the end fences 40L and 40R, and thus the positions of the multiple sheets S included in the sheet bundle Sb in the conveyance direction are aligned. At this time, the upper crimping teeth 42a and the lower crimping teeth 42b of the crimper 42 face the image forming region of the sheet S. Then, as illustrated in FIG. 19B, the sheet bundle Sb is moved in the second conveyance direction by the conveyance roller pair 36, and thus the crimper 42 faces the binding position outside the image forming region. This operation prevents a decrease in the binding force of the crimping.

A descriptions is given below of a second embodiment.

A descriptions is given below of a configuration of a binding device 30A according to a second embodiment with reference to FIGS. 20 to 25C. Detailed descriptions of features common to the first embodiment are omitted, and differences from the first embodiment are described below. The binding device 30A according to the second embodiment is different from the first embodiment in that end fences 40L and 40R are movable in the conveyance direction, and the other points are common to the first embodiment. In other words, the conveyance-direction mover according to the second embodiment includes at least the end fences 40L and 40R, and may also be a combination of a conveyance roller pair 36 and the end fences 40L and 40R.

FIG. 20 is an example of a plan view of the binding device 30A according to the second embodiment. As illustrated in FIG. 20, the binding device 30A may include a fence motor 61 (an example of a drive source), a drive pulley 62a, a driven pulley 62b, and endless annular belts 63a and 63b.

The fence motor 61 generates a driving force to move the end fences 40L and 40R in the conveyance direction. In the following description, it is assumed that the end fences 40L and 40R move in a second conveyance direction when the fence motor 61 rotates in the forward direction, and the end fences 40L and 40R move in a first conveyance direction when the fence motor 61 rotates in the reverse direction. The drive pulley 62a and the driven pulley 62b are rotatably supported by a binding case 31 at positions away from each other in the conveyance direction. The endless annular belt 63a is looped around an output shaft of the fence motor 61 and the drive pulley 62a. The endless annular belt 63b is looped around the drive pulley 62a and the driven pulley 62b. The end fences 40L and 40R are attached to the endless annular belt 63b.

In the second embodiment, the "first conveyance direction" and the "second conveyance direction," which represent the movement directions of the end fences 40L and 40R, respectively, refer to the same directions as the movement directions of a sheet S or a sheet bundle Sb supported on the internal tray 37. In other words, the end fences 40L and 40R moving in the first conveyance direction means that the end fences 40L and 40R move in a direction away from the internal tray 37. The end fences 40L and 40R moving in the second conveyance direction means that the end fences 40L and 40R move in a direction approaching the internal tray 37.

The driving force of the fence motor 61 is transmitted to the drive pulley 62a through the endless annular belt 63a. The endless annular belt 63b circulates around the drive pulley 62a and the driven pulley 62b in accordance with rotation of the drive pulley 62a. Accordingly, the end fences 40L and 40R attached to the endless annular belt 63b move in the conveyance direction. The drive pulleys 62a, the driven pulleys 62b, and the endless annular belts 63a and the 63b are an example of a driving-force transmission mechanism that transmits the driving force of the fence motor 61 to the end fences 40L and 40R.

FIG. 21A is another example of a plan view of the binding device 30A according to the second embodiment. FIG. 21B is a partial enlarged view of the binding device 30A. As illustrated in FIG. 21A, the binding device 30A may include a fence motor 61, a gear train 64, and a cam 65.

The gear train 64 includes a pair of gears that are located on the same axis and rotate as a unit. The gear train 64 has one gear meshed with a drive gear mounted on an output shaft of the fence motor 61, and the other gear meshed with a gear on the outer circumference of the cam 65. The cam 65 is rotatably supported by a binding case 31. End fences 40L and 40R are mounted at positions offset from the rotation center on the cam 65.

The driving force of the fence motor 61 is transmitted to the cam 65 through the gear train 64. As illustrated in FIG. 21B, the end fences 40L and 40R move in the conveyance direction due to the rotation of the cam 65. The gear train 64 and the cam 65 are another example of the driving-force transmission mechanism that transmits the driving force of the fence motor 61 to the end fences 40L and 40R.

In FIGS. 20 to 21B, the components for moving the end fences 40L and 40R in the conveyance direction (e.g., the fence motor 61, the drive pulley 62a, the driven pulley 62b, the endless annular belt 63a, the endless annular belt 63b, the gear train 64, and the cam 65) are disposed below the internal tray 37 (on the side opposite to the surface supporting the sheet S). On the other hand, the end fences 40L and 40R protrude above the internal tray 37. For this reason, the internal tray 37 includes a cutout for avoiding interference with the end fences 40L and 40R moving in the conveyance direction.

As illustrated in FIGS. 20 to 21B, the binding device 30A may include a position sensor 66 and a rotary encoder 61a.

The position sensor 66 detects the positions of the end fences 40L and 40R in the conveyance direction. The position sensor 66 outputs a position signal to the controller 160 when the end fences 40L and 40R are disposed at a predetermined position in the conveyance direction (e.g., a most downstream home position in the first conveyance direction), and stops outputting the position signal when the end fences 40L and 40R are disposed at a position different from the home position. The specific configuration of the position sensor 66 is not limited to any particular configuration. However, for example, a mechanical sensor, an optical sensor, or a magnetic sensors can be employed.

The rotary encoder 61a detects the drive amount (i.e., rotation amount per unit time) of the fence motor 61. More specifically, the rotary encoder 61a outputs pulse signals to the controller 160 in accordance with the rotation of the fence motor 61. The controller 160 can counts the pulse signals output from the rotary encoder 61a to grasp the drive amount of the fence motor 61.

FIGS. 22A and 22B are diagrams illustrating a position sensor 67 of a crimper 42. As illustrated in FIGS. 22A and 22B, the crimper 42 according to the second embodiment may be provided with the position sensor 67 (an example of a detector). The position sensor 67 is a sensor that detects the positions of the end fences 40L and 40R. More specifically, the position sensor 67 outputs a position signal to the controller 160 when a feeler 68A (FIG. 22A) or a feeler 68B (FIG. 22B) on the end fence 40L or the end fence 40R is detected, and stops outputting the position signal when the feeler 68A or the feeler 68B is not detected. The feelers 68A and 68B may be of any shape. The specific configuration of the position sensor 66 is not limited to any particular configuration. However, for example, a mechanical sensor, an optical sensor, or a magnetic sensors can be employed.

For example, the controller 160 may detect the positions of the end fences 40L and 40R by combination of the position sensor 66 and the rotary encoder 61a, may detect the positions of the end fences 40L and 40R by using the position sensor 67, or may detect the positions of the end fences 40L and 40R by combination of the position sensors 66 and 67 and the rotary encoder 61a.

A descriptions is given below of a conveyance-direction moving process.

FIG. 23 is a flowchart of a conveyance-direction moving process. FIGS. 24A, 24B, and 24C are diagrams illustrating an example of the relative positions of a sheet bundle Sb and the crimper 42 during a binding control process. FIG. 25A, 25B, and 25C are diagrams illustrating another example of the relative positions of a sheet bundle Sb and the crimper 42 during a binding control process.

The conveyance-direction moving process is executed instead of steps S1401 to S1404 in the binding control process of FIG. 14. In the following description, an example in which the controller 160 of FIG. 12 executes the conveyance-direction moving process will be described. However, the conveyance-direction moving process may be executed by the controller 150 of FIG. 13. At the start of the conveyance-direction moving process, the end fences 40L and 40R are located on the most downstream positions in the first conveyance direction, a sheet bundle Sb stacked on the internal tray 37 abuts on the end fences 40L and 40R, and the crimper 42 is located at the home position.

In steps S2301 and S2302, the controller 160 determines whether the sheet bundle Sb stacked on the internal tray 37 needs to be moved in a conveyance direction in order to cause the crimper 42 (more specifically, the upper crimping teeth 42a and the lower crimping teeth 42b) to face the binding position. In other words, the controller 160 may compare the binding position indicated by the binding information with the (fixed) position of the crimper 42 in the conveyance direction to determine whether the movement is necessary.

Subsequently, when the controller 160 determines that the sheet bundle Sb needs to be moved in the second conveyance direction (Yes in step S2301), in step S2303, the controller 160 determines whether the sheet bundle Sb is moved in the second conveyance direction for the first time in the binding control process for the sheet bundle Sb (i.e., the step of binding the plurality of binding positions of the sheet bundle Sb).

When the controller 160 determines that the sheet bundle Sb is moved for the first time (Yes in step S2303), in step S2304, the controller 160 causes the fence motor 61 to rotate in the forward direction by a target rotation amount + γ. On the other hand, when the controller 160 determines that the sheet bundle Sb is moved for the second time or later (No in step S2303), in step S2305, the controller 160 rotates the fence motor 61 in the forward direction by the target rotation amount. The content of the process of steps S2303 to S2305 is common to the process of steps S1402 to S1404. During the processes of steps S2303 to S2305, the drive roller 36a and the driven roller 36b may be away from each other or may be nipping the sheet bundle Sb.

On the other hand, when the controller 160 determines that the sheet bundle Sb needs to be moved in the first conveyance direction (No in step S2301 and Yes in step S2302), in step S2306, the controller 160 causes the fence motor 61 to rotate in reverse by the target rotation amount. In step S2307, the controller 160 causes the conveyance roller pair 36 to nip the sheet bundle Sb and rotates the conveyance motor 45 in the forward direction until the sheet bundle Sb abuts on the end fences 40L and 40R.

When the controller 160 determines that the sheet bundle Sb does not need to be moved in the conveyance direction (No in step S2301 and No in step S2302), the controller 160 ends the conveyance-direction moving process without executing the process of steps S2303 to S2307, and proceeds to the process of step S1405 and subsequent steps in FIG. 14. The controller 160 may control the position of the crimper 42 based on the positions of the end fences 40L and 40R detected by the position sensor 67 in the steps S1407 and S1408 in FIG. 14.

FIGS. 24A to 24C and FIGS. 25A to 25C illustrate examples in which three binding positions at the upper left corner of a sheet bundle Sb are bound by the crimper 42 in the oblique binding posture. The three binding positions in FIGS. 24A to 24C and FIGS. 25A to 25C are arranged so that straight lines L extending in the longitudinal direction of binding marks B1, B2, and B3 coincide.

As an example, as illustrated in FIGS. 24A to 24C, the controller 160 may cause the crimper 42 to bind three binding positions arranged in a straight line in order from an end (i.e., in order of the binding marks B1, B2, and B3). In other words, as illustrated in FIG. 24A, the controller 160 causes the crimper 42 to bind the sheet bundle Sb at the binding position corresponding to the binding mark B1 in a state where the sheet bundle Sb abuts on the end fences 40L and 40R located on the most downstream side in the first conveyance direction. Subsequently, as illustrated in FIG. 24B, the controller 160 causes the end fences 40L and 40R to move the sheet bundle Sb in the second conveyance direction and causes the crimper 42 to move to the front side in the main scanning direction, thus causing the crimper 42 to bind the sheet bundle Sb at the binding position corresponding to the binding mark B2. Then, as illustrated in FIG. 24C, the controller 160 causes the end fences 40L and 40R to move the sheet bundle Sb in the second conveyance direction, and causes the crimper 42 to move to the front side in the main scanning direction, thus causing the crimper 42 to bind the sheet bundle Sb at the binding position corresponding to the binding mark B3.

As another example, as illustrated in FIGS. 25A to 25C, the controller 160 may cause the crimper 42 to bind three binding positions arranged in a straight line such that a central binding position of the three binding positions is first (i.e., in the order of binding marks B2, B1, and B3). In other words, as illustrated in FIG. 25A, the controller 160 causes the end fences 40L and 40R to move the sheet bundle Sb in the second conveyance direction, and causes the crimper 42 to bind the sheet bundle Sb at the binding position corresponding to the binding mark B2. Subsequently, as illustrated in FIG. 25B, the controller 160 causes the end fences 40L and 40R to move in the first conveyance direction, causes the conveyance roller pair 36 to abut the sheet bundle Sb against the end fences 40L and 40R, and moves the crimper 42 to the back side in the main scanning direction, thus causing the crimper 42 to bind the sheet bundle Sb at the binding position corresponding to the binding mark B1. Then, as illustrated in FIG. 25C, the controller 160 causes the end fences 40L and 40R to move the sheet bundle Sb in the second conveyance direction and causes the crimper 42 to move to the front side in the main scanning direction, thus causing the crimper 42 to bind the sheet bundle Sb at the binding position corresponding to the binding mark B3.

A descriptions is given below of an operational effect of the second embodiment.

The second embodiment also achieves effects similar to those of the first embodiment. Since the existing end fences 40L and 40R function as the conveyance-direction mover, it is not necessary to newly add the conveyance-direction mover. Furthermore, since a sheet bundle Sb can always be bound in contact with the end fences 40L and 40R, the misalignment of multiple sheets S included in the sheet bundle Sb is prevented.

Further, according to the second embodiment, the position of the crimper 42 is controlled based on the positions of the end fences 40L and 40R detected by the position sensor 67. Thus, the position of the crimper 42 can be determined based on the actual position of the sheet bundle Sb abutting on the end fences 40L and 40R. Such a configuration can absorb variations in hardware and control errors and cause the crimper 42 to face the binding position with high accuracy.

Embodiments of the present disclosure are not limited to the above-described embodiments, and numerous additional modifications and variations are possible in light of the teachings within the technical scope of the present disclosure. It is therefore to be understood that the above-described embodiments of the present disclosure may be practiced otherwise by those skilled in the art than as specifically described herein. Such modifications are included in the technical scope described in the scope of claims.

Any one of the above-described operations may be performed in various other ways, for example, in an order different from the one described above.

The functionality of the elements disclosed herein may be implemented using circuitry or processing circuitry which includes general purpose processors, special purpose processors, integrated circuits, application-specific integrated circuits (ASICs), field-programmable gate arrays (FPGAs), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.

There is a memory that stores a computer program which includes computer instructions. These computer instructions provide the logic and routines that enable the hardware (e.g., processing circuitry or circuitry) to perform the method disclosed herein. This computer program can be implemented in known formats as a computer-readable storage medium, a computer program product, a memory device, a record medium such as a CD-ROM or DVD, and/or the memory of an FPGA or ASIC.

The aspects of the present disclosure are, for example, as follows.

### First aspect

A medium processing apparatus includes: a stacker to stack a medium; a conveyance-direction mover to move, in a conveyance direction, a medium bundle that is a plurality of media including the medium stacked on the stacker; a binder to move in a main scanning direction orthogonal to the conveyance direction and bind the medium bundle stacked on the stacker; and a controller to control an operation of the conveyance-direction mover and the binder. The controller causes the conveyance-direction mover to move the medium bundle stacked on the stacker in the conveyance direction and causes the binder to move in the main scanning direction, face a binding position on the medium bundle, and bind the binding position of the medium bundle.

### Second aspect

In the medium processing apparatus according to the first aspect, the binder is rotatable around a pivot shaft, which extends in a thickness direction of the medium stacked on the stacker, between a parallel binding posture in which a longitudinal direction of a rectangular binding mark aligns with the main scanning direction and an oblique binding posture in which the longitudinal direction of the rectangular binding mark is inclined with respect to the main scanning direction.

### Third aspect

In the medium processing apparatus according to the second aspect, the controller causes the binder in the oblique binding posture to bind a plurality of binding positions arranged in the longitudinal direction of the binding mark.

### Fourth aspect

In the medium processing apparatus according to the third aspect, the controller increases a first drive amount of a drive source that drives the conveyance-direction mover and the binder for the medium bundle with respect to a target movement amount, compared to a second or subsequent drive amount.

### Fifth aspect

In the medium processing apparatus according to any one of the first to fourth aspects, the controller increases and/or decreases a drive amount of a drive source that drives the conveyance-direction mover and the binder with respect to a target movement amount, based on medium information on the medium stacked on the stacker.

### Sixth aspect

In the medium processing apparatus according to any one of the third to fifth aspects, when three binding positions arranged in the longitudinal direction of the binding mark are bound, the controller causes the binder to bind a central binding position first among the three binding positions.

### Seventh aspect

In the medium processing apparatus according to any one of the first to sixth aspects, the conveyance-direction mover includes a conveyor to eject the medium bundle from the stacker.

### Eighth aspect

In the medium processing apparatus according to any one of the first to seventh aspects, the conveyance-direction mover includes a conveyance-direction aligner to abut on an end of the medium bundle stacked on the stacker, aligns positions of the plurality of media of the medium bundle in the conveyance direction, and is movable in the conveyance direction.

### Ninth aspect

In the medium processing apparatus according to the eighth aspect, the binder includes a detector to detect a position of the conveyance-direction aligner. The controller controls a position of the binder based on the position of the conveyance-direction aligner detected by the detector.

### Tenth aspect

In the medium processing apparatus according to any one of the first to ninth aspects, the controller is to change a location and number of the binding position on the medium bundle stacked on the stacker.

### Eleventh aspect

An image forming system includes: an image forming apparatus to form an image on a medium; and the medium processing apparatus according to any one of the first to tenth aspects to bind a medium bundle being media on which images are formed by the image forming apparatus.

### Twelfth aspect

An image forming system includes: an image forming device to form an image on a medium; a stacker to stack the medium that has passed through the image forming device; a conveyance-direction mover to move, in a conveyance direction, a medium bundle that is a plurality of media including the medium stacked on the stacker; a binder to move in a main scanning direction orthogonal to the conveyance direction and bind the medium bundle stacked on the stacker; and a controller to control an operation of the conveyance-direction mover and the binder. The controller causes the conveyance-direction mover to move the medium bundle stacked on the stacker in the conveyance direction and causes the binder to move in the main scanning direction, face a binding position on the medium bundle, and bind the binding position of the medium bundle.

### Thirteenth aspect

In the image forming system according to the eleventh or twelfth aspect, the controller acquires image formation information indicating an image forming region on which an image is formed by the image forming apparatus, and controls the operation of the conveyance-direction mover and the binder based on the acquired image formation information.

### Fourteenth aspect

In the image forming system according to the thirteenth aspect, the controller causes the binder to bind the binding position outside the image forming region indicated by the image formation information.

## Claims

1. A medium processing apparatus (1A, 1B, 1C), comprising:
a stacker (37) to stack a medium;
a conveyance-direction mover (36, 40L, 40R) to move, in a conveyance direction, a medium bundle that is a plurality of media including the medium stacked on the stacker;
a binder (42, 43) to move in a main scanning direction orthogonal to the conveyance direction and bind the medium bundle stacked on the stacker; and
a controller (160) to control an operation of the conveyance-direction mover and the binder,
wherein the controller (160) causes the conveyance-direction mover (36, 40L, 40R) to move the medium bundle stacked on the stacker (37) in the conveyance direction and causes the binder (42, 43) to move in the main scanning direction, face a binding position on the medium bundle, and bind the binding position of the medium bundle.

2. The medium processing apparatus according to claim 1, further comprising a shaft (55, 57) extending in a thickness direction of the medium stacked on the stacker,
wherein the binder (42, 43) is rotatable around the shaft (55, 57) between a parallel binding posture in which a longitudinal direction of a rectangular binding mark aligns with the main scanning direction and an oblique binding posture in which the longitudinal direction of the rectangular binding mark is inclined with respect to the main scanning direction.

3. The medium processing apparatus according to claim 2,
wherein the controller (160) causes the binder in the oblique binding posture to bind a plurality of binding positions arranged in the longitudinal direction of the binding mark.

4. The medium processing apparatus according to claim 3, further comprising a drive source (45, 47) to drive the conveyance-direction mover (36, 40L, 40R) and the binder (42, 43),
wherein the controller (160) increases a first drive amount of the drive source for the medium bundle with respect to a target movement amount, compared to a second or subsequent drive amount of the drive source for the medium bundle.

5. The medium processing apparatus according to any one of claims 1 to 4, further comprising a drive source (45, 47) to drive the conveyance-direction mover and the binder,
wherein the controller (160) increases and/or decreases a drive amount of the drive source with respect to a target movement amount of the conveyance-direction mover and the binder, based on medium information on the medium stacked on the stacker.

6. The medium processing apparatus according to any one of claims 2 to 4,
wherein when three binding positions arranged in the longitudinal direction of the binding mark are bound, the controller (160) causes the binder to bind a central binding position first among the three binding positions.

7. The medium processing apparatus according to any one of claims 1 to 6,
wherein the conveyance-direction mover includes a conveyor (36) to eject the medium bundle from the stacker (37).

8. The medium processing apparatus according to any one of claims 1 to 7,
wherein the conveyance-direction mover includes a conveyance-direction aligner (40L, 40R) to abut on an end of the medium bundle stacked on the stacker, aligns a position of the plurality of media of the medium bundle in the conveyance direction, and is movable in the conveyance direction.

9. The medium processing apparatus according to claim 8,
wherein the binder includes a detector (67) to detect a position of the conveyance-direction aligner (40L, 40R), and
the controller (160) controls a position of the binder based on the position of the conveyance-direction aligner detected by the detector.

10. The medium processing apparatus according to any one of claims 1 to 9,
wherein the controller (160) changes a location and number of the binding position on the medium bundle stacked on the stacker.

11. An image forming system, comprising:
an image forming apparatus to form an image on a medium; and
the medium processing apparatus according to any one of claims 1 to 10 to bind the medium bundle including the medium on which the image is formed by the image forming apparatus.

12. The image forming system according to claim 11,
wherein the controller (160) acquires image formation information indicating an image forming region on which an image is formed by the image forming apparatus (1A, 1B, 1C), and controls the operation of the conveyance-direction mover and the binder based on the acquired image formation information.

13. The image forming system according to claim 12,
wherein the controller (160) causes the binder (42, 43) to bind the binding position outside the image forming region indicated by the image formation information.
